# EUROPEAN PATENT SPECIFICATION

(11) **EP 3 948 414 B1**
(45) Date of publication and mention of the grant of the patent: **07.05.2025**
(21) Application number: 20784915.9
(22) Date of filing: 27.03.2020
(51) Int. Cl.: G02F 1/153, G02F 1/1516, G02F 1/1514

(54) **ELECTRO-OPTIC SUB-ASSEMBLIES AND ASSEMBLIES HAVING AN ELECTROCHROMIC GEL LAYER**
ELEKTROOPTISCHE UNTERANORDNUNGEN UND ANORDNUNGEN MIT EINER ELEKTROCHROMEN GELSCHICHT
SOUS-ENSEMBLES ÉLECTRO-OPTIQUES ET ENSEMBLES AYANT UNE COUCHE DE GEL ÉLECTROCHROMIQUE

(30) Priority: 29.03.2019 US 201962826064 P
(43) Date of publication of application: 09.02.2022
(73) Proprietor: GENTEX CORPORATION, Zeeland, Michigan 49464 (US)
(72) Inventor: DENOLF, Garret C., Zeeland, Michigan 49464 (US); NEUMAN, George A., Zeeland, Michigan 49464 (US); DOZEMAN, Gary J., Zeeland, Michigan 49464 (US); PETROELJE, Zachary J., Zeeland, Michigan 49464 (US); ANDERSON, John S., Zeeland, Michigan 49464 (US); STEPHENSON, Michael T., Zeeland, Michigan 49464 (US); SAENGER NAYVER, Mario F., Zeeland, Michigan 49464 (US); LIU, Sheng, Zeeland, Michigan 49464 (US); FORGETTE, Jeffrey A., Zeeland, Michigan 49464 (US)
(74) Representative: Müller-Boré & Partner Patentanwälte PartG mbB
(86) International application number: PCT/IB2020/052971
(87) International publication number: WO 2020/201972

(56) References cited:
- WO-A1-2011/086372
- WO-A1-2015/048161
- WO-A1-2017/192551
- WO-A1-2019/058281
- US-A1- 2007 278 448
- US-A1- 2016 266 460
- US-A1- 2017 031 226
- US-A1- 2019 048 159
- US-B1- 6 246 507

## Description

### FIELD OF THE DISCLOSURE

The present disclosure generally relates to electro-optic sub-assemblies and assemblies including electrochromic gel layers. More specifically, the present disclosure relates to electro-optic sub-assemblies including an anodic or cathodic gel layer on a polymeric substrate which can be assembled to form an electro-optic assembly.

### BACKGROUND

Electro-optic assemblies incorporating electrochromic materials have been utilized in a variety of devices to provide variability in color and light transmittance upon the application of a voltage potential. For example, electro-optic assemblies can be incorporated into mirrors to form an electrochromic mirror in which the reflectance can be varied based on the applied voltage. In another example, electro-optic assemblies can be incorporated into windows to form an electrochromic window in which the transmission of light can be varied based on the applied voltage. Conventional electro-optic assemblies are typically solution-based in which the electrochromic materials are supplied into a chamber of the electro-optic assembly as a solution. As the dimensions of the electrochromic devices increase, conventional solution-based electrochromic materials may not provide the desired electrochemical and electro-optical characteristics or be suitable for large-scale manufacturing. US 2017/031226 A1 constitutes prior art useful for understanding the invention.

There is a need for materials and methods for forming electro-optic assemblies which address some of the challenges relating to solution-based electrochromic materials and which provide opportunities for large-scale manufacturing.

### SUMMARY

The claimed invention provides a cathodic electro-optic sub-assembly as defined in appended independent claim 1, as well as an anodic electro-optic sub-assembly as defined in appended independent claim 9. Specific embodiments thereof are defined in the appended dependent claims.

There is further generally described herein an electro-optic assembly which includes a cathodic sub-assembly and an anodic sub-assembly. The cathodic sub-assembly includes a first substrate web, a first electrically conductive layer disposed on the first substrate web, and a cathodic gel layer disposed on the first electrically conductive layer, wherein the cathodic gel layer includes a cathodic component dispersed in a polymeric matrix, the cathodic gel layer having a thickness. The anodic sub-assembly includes a second substrate web, a second electrically conductive layer disposed on the second substrate web, and an anodic gel layer disposed on the second electrically conductive layer, wherein the anodic gel layer includes an anodic component dispersed in a polymeric matrix, the anodic gel layer having a thickness, and wherein at least one of the cathodic component and the anodic component is electro-optic, and a thickness variation of at least one of the cathodic gel layer and the anodic gel layer has less than about 20% of an average thickness of the respective gel layer.

These and other aspects, objects, and features of the present disclosure will be understood and appreciated by those skilled in the art upon studying the following specification, claims, and appended drawings.

### BRIEF DESCRIPTION OF THE DRAWINGS

In the drawings:
FIG. 1 is a schematic of a cross-sectional view of an electro-optic assembly according to an aspect of the present disclosure;
FIG. 2 is a schematic of a cross-sectional view of a cathodic sub-assembly and an anodic sub-assembly for forming the electro-optic assembly of FIG. 1 according to an aspect of the present disclosure;
FIG. 3 is a flow chart illustrating a method of assembling an electro-optic assembly according to an aspect of the present disclosure;
FIG. 4 is a schematic representation of a process for forming an electrically conductive layer according to an aspect of the present disclosure;
FIG. 5 is a schematic representation of a roll-to-roll process for forming an electro-optic sub-assembly according to an aspect of the present disclosure;
FIG. 6 is a schematic representation of a process for applying an electrochromic gel composition according to an aspect of the present disclosure;
FIG. 7A is a top-down view of an electrochromic gel pattern according to an aspect of the present disclosure;
FIG. 7B is a top-down view of an electrochromic gel pattern according to an aspect of the present disclosure;
FIG. 7C is a top-down view of an electrochromic gel pattern according to an aspect of the present disclosure;
FIG. 8 is a partially exploded view of an electrochromic device according to an aspect of the present disclosure;
FIG. 9 is a cross-sectional view of an electrochromic device according to an aspect of the present disclosure; and
FIG. 10 is a cross-sectional view of an electrochromic device according to an aspect of the present disclosure.

### DETAILED DESCRIPTION

The present illustrated aspects reside primarily in combinations of method steps and apparatus components related to electrochromic films for use in electro-optic elements and devices. Accordingly, the apparatus components and method steps have been represented, where appropriate, by conventional symbols in the drawings, showing only those specific details that are pertinent to understanding the aspects of the present disclosure so as not to obscure the disclosure with details that will be readily apparent to those of ordinary skill in the art having the benefit of the description herein. Further, like numerals in the description and drawings represent like elements.

As used herein, the term "and/or," when used in a list of two or more items, means that any one of the listed items can be employed by itself, or any combination of two or more of the listed items, can be employed. For example, if a composition is described as containing components A, B, and/or C, the composition can contain A alone; B alone; C alone; A and B in combination; A and C in combination; B and C in combination; or A, B, and C in combination.

In this document, relational terms, such as first and second, top and bottom, and the like, are used solely to distinguish one entity or action from another entity or action, without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ... a" does not, without more constraints, preclude the existence of additional identical elements in the process, method, article, or apparatus that comprises the element.

As used herein, "about" will be understood by persons of ordinary skill in the art and will vary to some extent depending upon the context in which it is used. If there are uses of the term which are not clear to persons of ordinary skill in the art, given the context in which it is used, "about" will mean up to plus or minus 10% of the particular term.

The present illustrated embodiments reside primarily in combinations of method steps and apparatus components relating to an electro-optic assembly that is formed from a pair of electro-optic sub-assemblies. One of the pair of electro-optic sub-assemblies is formed from a substrate web, such as a polymeric web or a glass web, onto which an electrically conductive layer and an electroactive gel layer including a cathodic component is provided and the other of the pair of electro-optic sub-assemblies is formed from a substrate web, such as a polymeric web or glass web, onto which an electrically conductive layer and an electroactive gel layer including an anodic component is provided. Each of the pair of electro-optic sub-assemblies can be formed separately and brought together to form the electro-optic element having both a cathodic component and an anodic component. Each of the pair of electro-optic assemblies can be formed from a substrate web from which multiple electro-optic sub-assemblies can be cut. The electro-optic sub-assemblies and methods disclosed herein utilizing a substrate web as a substrate can facilitate large scale production of electro-optic assemblies and provide advantages in forming and/or storing the cathodic and anodic electroactive gel layers individually.

Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

### Structures and Materials

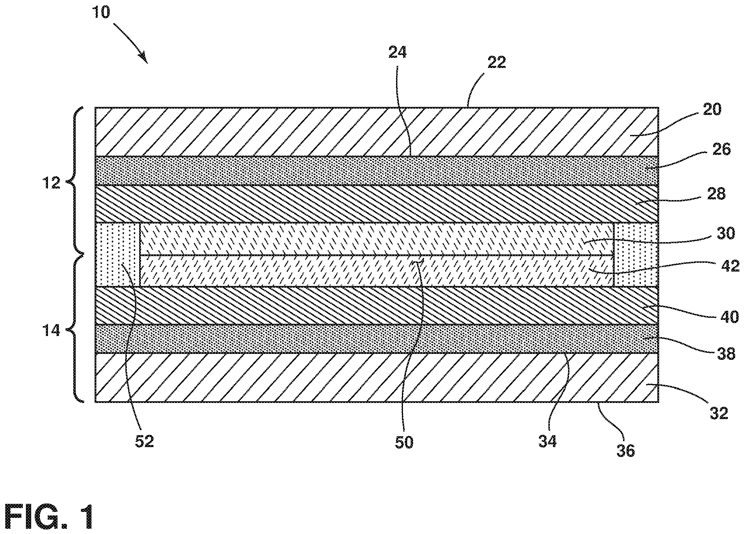

Referring to FIGS. 1-2, an electro-optic assembly 10 according to aspects of the present disclosure is provided. The electro-optic assembly 10 includes a pair of electro-optic sub-assemblies in the form of a cathodic sub-assembly 12 and an anodic sub-assembly 14, both of which include an electrochromic component. The cathodic sub-assembly 12 includes a first substrate 20 having a first surface 22 and a second surface 24. An optional first barrier layer 26 is disposed on the second surface 24 between a first electrically conductive layer 28 and the second surface 24. A cathodic gel layer 30 including a cathodic component dispersed in a polymeric matrix is disposed on the first electrically conductive layer 28. As used herein, the term "dispersed" when used to describe a particular component with respect to a polymeric matrix is used to mean that at least a portion of the molecules of a particular component may be capable of movement within the polymeric matrix (also referred to as mobile within the polymeric matrix) and/or at least a portion of the molecules of the particular component are physically and/or chemically bound or trapped within the polymeric matrix such that their movement within the polymeric matrix is restricted (also referred to as immobile within the polymeric matrix).

The anodic sub-assembly 14 includes a second substrate 32 having a third surface 34 and a fourth surface 36. An optional second barrier layer 38 is disposed on the third surface 34 between a second electrically conductive layer 40 and the third surface 34. An anodic gel layer 42 including an anodic component dispersed in a polymeric matrix is disposed on the second electrically conductive layer 40. According to the claimed invention, the anodic and cathodic components exhibit electrochromic behavior and thus may alternatively be referred to as chromophores or electrochromic molecules. According to the claimed invention, both the cathodic and anodic components are electroactive and electrochromic. It will be understood that regardless of its ordinary meaning, the term "electroactive" is used herein to refer to a material that undergoes a modification in its oxidation state upon exposure to a particular electrical potential difference. The term "electrochromic" is used herein to refer to a material that exhibits a change in its extinction coefficient at one or more wavelengths upon exposure to a particular electrical potential difference. Electrochromic components, as described herein, include materials whose color and/or opacity are affected by an electrical current, such that when an electrical field is applied to the material, the color and/or opacity changes from a first phase to a second phase. In another aspect of the present disclosure, and not according to the claimed invention, the anodic and/or cathodic components may be electroactive components in the form of liquid crystal molecules or suspended particles. Non-limiting examples of electroactive and/or electrochromic components are described in U.S. Patent Nos. 5,928,572, issued July 27, 1999 and entitled "Electrochromic Layer And Devices Comprising Same," 5,998,617, issued December 7, 1999 and entitled "Electrochromic Compounds," 6,020,987, issued February 1, 2000 and entitled "Electrochromic Medium Capable Of Producing A Pre-selected Color," 6,037,471, issued March 14, 2000 and entitled "Electrochromic Compounds," 6,141,137, issued October 31, 2000 and entitled "Electrochromic Media For Producing A Pre-selected Color," 6,241,916, issued June 5, 2001 and entitled "Electrochromic System," 6,193,912, issued February 27, 2001 and entitled "Near Infrared-Absorbing Electrochromic Compounds And Devices Comprising Same," 6,249,369, issued June 19, 2001 and entitled "Coupled Electrochromic Compounds With Photostable Dication Oxidation States," 6,137,620, issued October 24, 2000 and entitled "Electrochromic Media With Concentration Enhanced Stability, Process For The Preparation Thereof and Use In Electrochromic Devices;" U.S. Patent No. 6,519,072, issued February 11, 2003 and entitled "Electrochromic Device;" and International Patent Application Serial Nos. PCT/US98/05570, published as WO1998/042796 on October 1, 1998, entitled "Electrochromic Polymeric Solid Films, Manufacturing Electrochromic Devices Using Such Solid Films, And Processes For Making Such Solid Films And Devices," PCT/EP98/03862, published as WO1999/02621 on January 21, 1999, entitled "Electrochrome Polymer System," and PCT/US98/05570, published as WO1998/042796 on October 1, 1998, entitled "Electrochromic Polymeric Solid Films, Manufacturing Electrochromic Devices Using Such Solid Films, And Processes For Making Such Solid Films And Devices". Non-limiting examples of cathodic components according to the present disclosure include a viologen, a viologen derivative, a methyl viologen, an octyl viologen, a benzyl viologen, a di-acrylate viologen, a di-vinyl viologen, a di-vinyl ether viologen, a di-epoxy viologen, a di-oxetane viologen, a di-hydroxy viologen, 1,1'-dialkyl-2,2'-bipyridinium, ferrocenium, substituted ferrocenium, a diimide, N,N'-dialkyl pyrometallic diimide, N,N'-dimethyl-1,4,5,8-naphthalene diimide, and combinations thereof. Exemplary viologen derivatives are described in U.S. Pat. Nos. 4,902,108; 6,188,505; 5,998,617; 9,964,828; and 6,710,906. Non-limiting examples of anodic components include metallocenes, 5,10-dihydrophenazines, phenothiazines, phenoxazines, carbazoles, triphendioxazines, triphenodithiazines, ferrocene, substituted ferrocenes, substituted ferrocenyl salts, phenazine, substituted phenazines, substituted phenothiazines, substituted dithiazines, thianthrene, substituted thianthrenes, di-tert-butyl-diethylferrocene, 5,10-dimethyl-5,10-dihydrophenazine (DMP), bis(triethylaminopropyl)dihydrophenazine bis(tetrafluoroborate), 3,7,10-trimethylphenothiazine, 2,3,7,8-tetramethoxy-thianthrene, 10-methylphenothiazine, tetramethylphenazine (TMP), 5,10-triethylammoniumpropylphenazine, bis(butyltriethylammonium)-para-methoxytriphenodithiazine (TPDT), and combinations thereof.

The second surface 24 of the first substrate 20 and the third surface 34 of the second substrate 32 at least partially define a chamber 50 within which at least the cathodic gel layer 30 and the anodic gel layer 42 is disposed. A sealing member 52 can be provided around the chamber 50 to protect the contents of the chamber 50 from oxygen and/or moisture. While the sealing member 52 is illustrated schematically in FIG. 1 as being located between the second surface 24 on the first substrate 20 and the third surface 34 of the second substrate 32, other configurations of the sealing member 52 are possible according to the present disclosure. The sealing member 52 may be positioned around the perimeter of the device as in a "C" configuration, may be remotely located, or any number of other configurations that will vary depending on the final use of the electro-optic assembly 10. For simplicity, herein, we refer to the sealing member 52 as being between the first and second substrates 20, 32 but this configuration should be understood to be non-limiting to the present disclosure and examples or descriptions of devices, unless explicitly noted, may be configured with different variations of the sealing member 52.

One or both of the cathodic sub-assembly 12 and the anodic sub-assembly 14 can include additional layers, non-limiting examples of which include polarizers, anti-reflective layers, filters, resistive layers, ultraviolet light reflecting or absorbing layers, gas diffusion barrier layers, water vapor diffusion barrier layers, etc... In some examples, the cathodic gel layer 30 and/or the anodic gel layer 42 can include an ion conduction layer disposed thereon. The ion conduction layer can be configured to be conductive to positively charged ions, such as H⁺ or Li⁺, but low in electron conductivity in comparison.

The first substrate 20 and the second substrate 32 can be formed from the same or different materials. The first and/or second substrates 20, 32 can be formed from any suitable polymeric material, glass material, or glass-ceramic material. Non-limiting examples of suitable polymeric materials for forming the first substrate 20 and/or the second substrate 32 includes polyethylene (e.g., low and/or high density), polyethylene terephthalate (PET), polyethylene naphthalate (PEN), polycarbonate, polysulfone, acrylic polymers (e.g., poly(methyl methacrylate) (PMMA)), polymethacrylates, polyimides, polyamides (e.g., a cycloaliphatic diamine dodecanedioic acid polymer, such as Trogamid^{®} CX7323)), epoxies, cyclic olefin polymers (COP) (e.g., Zeonor 1420R), cyclic olefin copolymers (COC) (e.g., Topas 60135-04 or Mitsui Apel), polymethylpentene, cellulose ester based plastics (e.g., cellulose triacetate), transparent fluoropolymer, polyacrylonitrile, other polymeric materials and/or combinations thereof. Non-limiting examples of suitable glass materials include borosilicate glass and soda lime glass.

The first barrier layer 26 and the second barrier layer 38 can be formed from the same or different materials. The first and second barrier layers 26, 38 can be provided to protect the first and second substrates 20, 32 from interacting with contents of the chamber 50, such as solvents, which may be harmful and/or degrade the first and/or second substrates 20, 32, particularly when the first and second substrates 20, 32 are made from polymeric materials. In some aspects, the first and second barrier layers 26, 38 provide resistance to oxygen and/or water permeation. The first and second barrier layers 26, 38 can also be configured to decrease degradation of the first and second electrically conductive layers 28, 40 due to interactions with the contents of the chamber 50. In one aspect, the first and/or second barrier layer 26, 38 can be used in combination with the respective first and second electrically conductive layers 28, 40 to form an insulator-metal-insulator (IMI) stack. The IMI stack can include a silver metal or silver metal alloy layer, the electrically conductive layer 26, 40, and a polymer resin layer. The polymer resin layer can be selected from acrylic polymer resins, siloxane based resins, polyethylene terephthalate (PET) resins, polyester resins, poly(methyl methacrylate) (PMMA), polycarbonate resins, or a combination thereof. Exemplary IMI stacks for use as barrier layers 26 and 38 are disclosed in U.S. Provisional Patent Application No. 62/769,693, filed on November 20, 2018, entitled "Plastic Coatings for Improved Solvent Resistance," and U.S. Provisional Patent Application No. 62/660,018, filed on April 19, 2018, entitled "Plastic Coatings for Improved Solvent Resistance".

In another example, the first and/or second barrier layers 26, 38 can include a polymer multi-layer film. Polymer multi-layer (PML) films typically consist of alternating layers of cross-linked polymer and inorganic layers to form optically clear, flexible, oxygen and water barriers which provide resistance to the permeation of oxygen and water into the chamber 50. An example of a commercially available PML barrier film is the Flexible Transparent Barrier (FTB) Film product line offered by 3M^{™}. An exemplary process for forming a PML barrier layer includes applying a first polymer to a polymeric substrate via flash evaporation and vapor deposition of monomers, followed by plasma, UV, or e-beam curing. The first polymer layer could also be applied via printing, slot die coating, or spraying followed by UV or e-beam curing. The inorganic layer can be applied next using conventional sputtering, evaporation, atomic layer deposition, spraying coating and/or other deposition methods under vacuum or at ambient pressure. The final polymer layer is applied on top of the inorganic layer using the flash evaporation method or other methods listed above. Optionally, another inorganic layer may be applied on top of the polymer layer. In one aspect, the PML structure or stack can be three, four, or more layers. The polymer layers can include volatile monomers which can be cross-linked into transparent polymers, examples of which include diacrylates available from Sartomer^{®} such as SR833S, SR351, SR3238B, and SR9003B, or other volatile monomers. Suitable inorganic layer materials include metal oxides, metal nitrides, aluminum oxide, silicon oxide, indium tin oxide, silicon nitride, and combinations thereof. Other PMLs including alternative combinations of polymeric layers and inorganic layers can also be utilized.

An example of a commercially available polymeric substrate having a barrier layer provided thereon includes FTB3-125 Barrier Film, available from 3M, which is described by 3M as a polyethylene terephthalate (PET) substrate with two vacuum deposited polymer layers and an inorganic oxide layer positioned between the two polymer layers. The FTB-125 product can be utilized to provide the first and/or second substrate 20, 32 with the respective barrier layer 26, 38 already applied. A commercially available IMI stack suitable for use as the first and/or second substrates 20, 32 with the respective barrier layer 26, 38 already applied includes a silver-based IMI stack commercially available from TDK Corporation, to which an additional transparent conductive oxide layer (TCO), such as indium tin oxide (ITO), has been applied to the exposed surface of the IMI stack.

The first electrically conductive layer 28 and the second electrically conductive layer 40 can be formed from the same or different materials. One or both of the first and second electrically conductive layers 28, 40 can be transparent and optionally one of the layers can be opaque, depending on the end-use of the electro-optic assembly 10. Non-limiting examples of suitable transparent materials for the first and/or second electrically conductive layer 28, 40 include transparent conductive oxides (TCO), fluorine-doped tin oxide (F:SnO₂), aluminum-doped zinc oxide (AZO), indium-doped zinc oxide (IZO), indium tin oxide (ITO), doped zinc oxide, indium zinc oxide, metal oxide/metal/metal oxide (e.g. the metal can be any suitable metal or metal alloy, such as silver, gold, palladium, silver alloys, gold alloys, palladium alloys, silver-gold alloys, and silver-palladium alloys), silver nano-wire coatings, carbon nanotubes, graphene coatings, conductive nanorods, wire grids, and conductive polymers, an example of which includes poly(3,4-ethylenedioxythiophene) (PEDOT). Non-transparent materials suitable for use as an electrically conductive layer include metal coatings such as rhodium, chromium, nickel, silver, gold, and other metals, or mixtures of any two or more thereof. In one aspect, at least one layer can be deposited by atomic layer deposition (ALD) between the first and/or second electrically conductive layers 28, 40 and an IMI stack barrier layer 26, 38. The ALD deposited material can include aluminum oxide, titanium dioxide, and AZO.

The cathodic gel layer 30 includes a cathodic component dispersed in a polymeric gel matrix. The cathodic gel layer 30 is formed as a free-standing (permanent) gel in which an electrochromic medium, including the cathodic component, is dispersed, such as interspersed and/or entrapped, in a polymeric matrix, and which continues to behave similar to a solution. In one aspect, more than one cathodic component can be included in the cathodic gel layer 30. According to one aspect of the present disclosure, at least a portion of the cathodic component dispersed within the polymeric matrix is mobile within the polymeric matrix. According to another aspect, at least a portion of the cathodic component dispersed within the polymeric matrix is immobile within the polymeric matrix. For example, at least a portion of the cathodic component dispersed within the polymeric matrix may be chemically bonded to the polymeric matrix and/or physically entrapped within the polymeric matrix. In one example, at least a portion of the cathodic component is functionalized such that the cathodic component is capable of reacting with the polymeric matrix such that the functionalized cathodic component may be covalently bonded with the polymeric matrix. Examples of cathodic components chemically bonded or physically entrapped within a polymeric matrix can be found in U.S. Patent No. 9,964,828, entitled "Electrochemical Energy Storage Devices," issued on May 8, 2018. Non-limiting examples of suitable cathodic components include a viologen and a metal oxide, such as tungsten. Exemplary viologens include, but are not limited to, methyl viologen, octyl viologen, benzyl viologen, and polymeric viologens. In one aspect, the cathodic component is an octyl viologen. In some aspects, the cathodic component may include crystalline or nanocrystalline tungsten oxide (WOₓ, where x is 2.6 < x < 3.4), vanadium oxide (V₂O₅), nickel oxide (NiO), ferrocenium, perovskite materials, such as samarium nickelate (SmNiO₃), or other metal oxides of the formula A_{y}B_{z}Oₓ, where A and B are metals. The relative amounts of components A and B may vary such that y and z may individually be any value from about 1 to about 20. For example, y and z may individually from any value from about 1 to about 20, about 1 to about 15, about 1 to about 10, about 1 to about 5, or about 1 to about 3. The amount of oxygen present in metal oxides of the formula A_{y}B_{z}Oₓ may vary at least in part based on the oxidation states of the metals A and B and their relative amount in the film. According to one aspect, the value of x will nominally be at a level sufficient to attain stoichiometry. For example, the value of x may be from about 80% to about 120% of it stoichiometric value. In some examples, the value of x may be from about 80% to about 120%, about 80% to about 110%, about 80% to about 100%, about 90% to about 120%, about 90% to about 110%, about 90% to about 100%, about 95% to about 120%, about 95% to about 110%, about 95% to about 105%, or about 90% to about 100% of stoichiometry. The concentration of the cathodic component in the cathodic gel layer 30 can be about 10 millimolar (mM) to about 200 mM.

The anodic gel layer 42 includes an anodic component dispersed in a polymeric gel matrix. The anodic gel layer 42 is formed as a free-standing (permanent) gel in which an electrochromic medium, including the anodic component, is dispersed, such as interspersed and/or entrapped in a polymeric matrix, and which continues to behave similar to a solution. In one aspect, more than one anodic component can be included in the anodic gel layer 42. According to one aspect of the present disclosure, at least a portion of the anodic component dispersed within the polymeric matrix is mobile within the polymeric matrix. According to another aspect, at least a portion of the anodic component dispersed within the polymeric matrix is immobile within the polymeric matrix. For example, at least a portion of the anodic component dispersed within the polymeric matrix may be chemically bonded to the polymeric matrix and/or physically entrapped within the polymeric matrix. In one example, at least a portion of the anodic component is functionalized such that the anodic component is capable of reacting with the polymeric matrix such that the functionalized anodic component may be covalently bonded with the polymeric matrix. Examples of anodic components chemically bonded or physically entrapped within a polymeric matrix can be found in U.S. Patent No. 9,964,828, entitled "Electrochemical Energy Storage Devices," issued on May 8, 2018. Non-limiting examples of suitable anodic components include metallocenes, 5,10-dihydrophenazines, phenothiazines, phenoxazines, carbazoles, triphendioxazines, triphenodithiazines, ferrocene, substituted ferrocenes, substituted ferrocenyl salts, phenazine, substituted phenazines, and substituted phenothiazines, including substituted dithiazines, thianthrene, and substituted thianthrenes, di-tert-butyl-diethylferrocene, 5,10-dimethyl-5,10-dihydrophenazine (DMP), bis(triethylaminopropyl)dihydrophenazine bis(tetrafluoroborate), 3,7,10-trimethylphenothiazine, 2,3,7,8-tetramethoxy-thianthrene, 10-methylphenothiazine, tetramethylphenazine (TMP), 5,10-triethylammoniumpropylphenazine, and bis(butyltriethylammonium)-para-methoxytriphenodithiazine (TPDT). In one aspect, the anodic component includes 5,10-dihydro-5,10-dimethylphenazine. In another aspect, the anodic component includes a combination of 5,10-dihydro-5,10-dimethylphenazine and 5,10-dineopentyl-5,10-dihydro-2,7-di-isobutylphenazine, 5,10-triethylammoniumpropylphenazine. The total concentration of anodic components can be about 10 mM to about 130 mM.

The cathodic gel layer 30 and the anodic gel layer 42 are formed as a free-standing gel that includes at least one solvent and a cross-linked polymeric matrix. As described in more detail below, because each of the cathodic sub-assembly 12 and anodic sub-assembly 14 are individually formed on their respective substrates, the cathodic gel layer 30 and the anodic gel layer 42 are preferably formed with sufficient to rigidity to maintain their shape (thickness and length and width dimensions) during processing until the sub-assemblies 12, 14 are assembled to form the electro-optic assembly 10. In one aspect, the cathodic gel composition and the anodic gel composition are configured such that a change in shape between an initially deposited gel composition and the final cured gel layer is less than about 30%, less than about 20%, or less than about 10%.

The cathodic gel layer 30 and the anodic gel layer 42 can have the same or different thickness. In one aspect, the thickness of the cathodic gel layer 30 and the anodic gel layer 42 are in the range of about 20 micrometers (µm) to about 500 µm, possibly about 20 µm to about 400 µm, about 20 µm to about 300 µm, about 20 µm to about 200 µm, about 20 µm to about 100 µm, about 20 to about 50µm, about 50 µm to about 500 µm, about 50 µm to about 400 µm, about 50 µm to about 300 µm, about 50 µm to about 300 µm, about 50 µm to about 200 µm, about 50 µm to about 100 µm, about 100 µm to about 500 µm, about 100 µm to about 400 µm, about 100 µm to about 300 µm, about 100 µm to about 200 µm, about 200 µm to about 500 µm, about 200 µm to about 400 µm, about 200 µm to about 300 µm, about 300 µm to about 500 µm, about 300 µm to about 400 µm, or about 400 µm to about 500 µm.

According to the claimed invention, the cathodic gel layer 30 and/or anodic gel layer 42 have a predetermined thickness variation. The cathodic gel layer 30 and/or anodic gel layer 42 have a thickness characterized by a maximum measured thickness Th_{MAX}, a minimum measured thickness Th_{MIN}, an average thickness Th_{AVG}, and a thickness variation defined as (Th_{MAX} - Th_{MIN}). According to the claimed invention, the cathodic gel layer 30 and/or anodic gel layer 42 are configured such that a thickness variation of the layer is less than about 20% of the average thickness Th_{AVG} of the respective layer. That is, the cathodic gel layer 30 and/or anodic gel layer 42 are configured such that a thickness variation of the layer is less than about 20%, less than about 15%, less than 10%, less than 5%, or less than 2.5% of the average thickness Th_{AVG}. The cathodic gel layer 30 and/or anodic gel layer 42 can be configured to satisfy the desired thickness variation over an entirety or a portion of an area of the respective layer. For example, the cathodic gel layer 30 and/or anodic gel layer 42 can be configured such that the layer has the desired thickness variation over greater than about 50% of the layer area, greater than about 65% of the layer area, greater than about 75% of the layer area, greater than about 85% of the layer area, or greater than about 95% of the layer area.

In one aspect, the polymeric matrix forming the cathodic gel layer 30 and/or the anodic gel layer 42 is formed by cross-linking polymer chains, where the polymer chains are formed by the polymerization of at least one monomer. Non-limiting examples of suitable monomers include methyl methacrylate, methyl acrylate, isocyanatoethyl methacrylate, 2-isocyanatoethyl acrylate, 2-hydroxyethyl methacrylate, 2-hydroxyethyl acrylate, 3-hydroxypropyl methacrylate, glycidyl methacrylate, 4-vinylphenol, acetoacetoxy methacrylate, and acetoacetoxy acrylate. The at least one monomer can be pre-polymerized and dispersed and/or dissolved in a suitable solvent system prior to application of the solution to the substrate or after the solution is deposited on the substrate such that polymerization and cross-linking both proceed on the substrate.

In one aspect, hydroxyethyl methacrylate (HEMA) may be combined with methyl acrylate (MA) to form a copolymer. In another aspect, hydroxyethyl methacrylate (HEMA) may be combined with methyl methacrylate (MMA) to form a copolymer. The molar ratio of HEMA to MMA be about 1:3 to about 1:50, with the preferred ratio being about 1:10. In one aspect, the cross-linker for a pre-polymer having a hydroxyl (or any reactive group having an active hydrogen, such as thiol, hydroxyl, acetoacetyl, urea, melamine, urethane, etc.) is an isocyanate, isothiocyanate, or the like having a functionality greater than one. In one aspect, a molar ratio of isocyanate cross-linking agent to hydroxyl groups in the polymer or co-polymer being catalyzed is about 0.5:1 to about 10:1. In an exemplary aspect, 2-hydroxyethylmethacrylate and methyl acrylate are randomly polymerized to form the polymeric matrix. In one aspect, 2-isocyanatoethyl methacrylate (IEMA) may be combined with MMA in the ratio of about 1:3 to about 1:50, with the preferred ratio of about 1:20. Cross-linking of a group containing an isocyanate can occur with any compound containing a reactive hydrogen, such as hydroxyl, thiol, acetoacetyl, urea, melamine, or urethanes.

In one aspect, the polymeric matrices of the cathodic gel layer 30 and/or the anodic gel layer 42 may include materials which are pre-polymerized prior to deposition of the layer onto the respective substrate and cross-linked after deposition or the materials may be simultaneously polymerized and cross-linked following deposition of the layer onto the substrate. In one aspect, the polymeric matrices of the cathodic gel layer 30 and/or the anodic gel layer 42 include polyols with hydroxyl functionalities of at least two, i.e., polymer molecules with at least two hydroxyl groups that can react with other functional groups, such as, among others, isocyanate groups, metal alkoxide groups, or ketene groups. Examples of metal alkoxides include tetramethyl or tetraethyl orthosilicate or titanium (IV) isopropoxide. In the polymeric matrices, the polyols are crosslinked by molecules of a bridging compound, which in turn have at least two functional groups that can react with the reactive hydroxyls of the polyols, an example of which includes materials including thiol functional groups.

In another aspect, the polymeric matrices of the cathodic gel layer 30 and/or the anodic gel layer 42 may be formed by cross-linking two co-polymers. For example HEMA/MMA may be combined with IEMA/MMA and the hydroxyl groups of HEMA will self-react with the isocyanate groups of IEMA to form an open polymeric structure.

According to the claimed invention, an amount of polymeric matrix in the cathodic gel layer 30 and/or the anodic gel layer 42 is about 20 wt. % to about 50 wt. %. The characteristics of the materials and methods for forming the gel layers can be selected to provide each of the cathodic gel layer 30 and the anodic gel layer 42 with the desired gel properties (e.g., gel thickness and gel rigidity) while also providing a gel layer that allows for sufficient ion mobility within the gel layer to provide the desired electrochromic properties.

The cathodic gel layer 30 and anodic gel layer 42 can be formed using the same or different solvents. In one aspect, both the cathodic gel layer 30 and the anodic gel layer 42 are formed using propylene carbonate as the solvent. Additional, non-limiting examples of suitable solvents include cyclic esters, such as propylene carbonate, isobutylene carbonate, gamma-butyrolactone, gamma-valerolactone, any homogeneous mixture that is liquid at room temperature of any two or more of propylene carbonate, isobutylene carbonate, gamma-butyrolactone, and gamma-valerolactone, and any homogenous mixture that is liquid at room temperature of any one or more of propylene carbonate, isobutylene carbonate, gamma-butyrolactone, and gamma-valerolactone with ethylene carbonate. Additional co-solvents may be include in the cathodic and/or anodic gel layers 30, 42 to aid in the gel coating process, non-limiting examples of which include acetonitrile and 3-methoxypropionitrile. The co-solvents may facilitate adjusting a surface tension of the fluid and/or to increase solubility limits of the cathodic and/or anodic gel layers 30, 42, as needed.

Characteristics such as an amount of polymeric matrix, a degree of cross-linking, a rate of cross-linking, the type of cross-linker, and the type of polymers, can be selected to provide the formed cathodic gel layer 30 and the anodic gel layer 42 with the desired gel features. For example, a rigidity of the free standing gel layer 30 and/or 42 can be altered by changing the polymer molecular weight, the weight percent of the polymer, and/or the crosslink density of the polymeric matrix. In one aspect, the gel rigidity generally increases with increasing polymer concentration (weight percent), increasing crosslink density, and/or to some extent with increasing molecular weight. In one aspect, a rate of crosslinking for any of the polymers described herein can be controlled at last in part by selection of the reactive crosslinking species. For example, in some aspects, the reaction rates can be increased by using an aromatic isocyanate or an aromatic alcohol or both. In other aspects, reaction rates can be decreased, for example, by using sterically hindered isocyanates or sterically hindered alcohols or both.

The polymeric matrix forming the cathodic gel layer 30 and the anodic gel layer 42 may be the same or different. Either or both of the cathodic gel layer 30 and the anodic gel layer 42 can include additional components, non-limiting examples of which include ultraviolet light (UV) stabilizing agents, thickeners, stabilizers, current carrying electrolytes, surfactants, rheology modifiers, etc. In some aspects, the cathodic gel layer 30 and/or the anodic gel layer 42 are formed from a composition that includes thickening agents to provide the gel layer with the desired thickness. Non-limiting examples of suitable thickening agents include colloidal silica and acrylic fibers.

Non-limiting examples of polymer and solvent systems that can be utilized in the present disclosure for forming the cathodic gel layer 30 and the anodic gel layer 42 are disclosed in U.S. Patent Nos. 5,888,431; 7,001,540; 5,940,201; 6,635,194; and 5,928,572; and U.S. Patent Application Publication No. 2015/0346573 and 2019/0048159.

The sealing member 52 can be any suitable structure for sealing a perimeter of the electro-optic assembly 10 to isolate the contents of the chamber 50 from ambient oxygen and/or moisture. In one aspect, the sealing member 52 may be a heat seal film which attaches to the first and second substrates 20, 32 at an edge of the first and second substrates 20, 32 around the perimeter of the electro-optic assembly 10. In one aspect, the sealing members covers an edge of the first surface 22 of the first substrate 20 and extends to an edge of the fourth surface 36 of the second substrate 32. The sealing member 52 can be configured to provide a barrier to isolate the contents of the chamber 50 from moisture and/or oxygen. Suitable heat seal films are typically multilayers consisting of an inner sealant layer, middle core layer, and outer barrier layer which may or may not include an aluminum foil layer. The films can be applied using a heat sealer to attach the film to the edge of the electro-optic assembly 10. An example of a heat seal film without a foil layer includes Torayfan^{®} CBS2 from Toray, and an example of a metallized heat seal film is Torayfan^{®} PWXS from Toray. Additionally, a pressure-sensitive adhesive can be added to the inner sealant layer to adhere the film at room temperature and/or to improve adhesion during heat sealing. An example of a pressure sensitive adhesive for this purpose is 8142KCL from 3M^{®}.

In some aspects, the sealing member 52 may be applied as a liquid layer around the perimeter of the cathodic and anodic gel layers 30, 42, and heat, ultraviolet light, or a combination thereof can be applied to cure the liquid layer and form the sealing member 52. Non-limiting examples of suitable liquid layer materials include silicones, epoxies, acrylics, hot melts, and polyurethanes. In another aspect, a pre-formed layer, such as a pressure-sensitive adhesive layer (e.g., an acrylic) can be used to form the sealing member 52. In these examples, the sealing member 52 may optionally extend between the first and second electrically conductive layers 28, 40 or have a generally C-shaped cross-sectional profile.

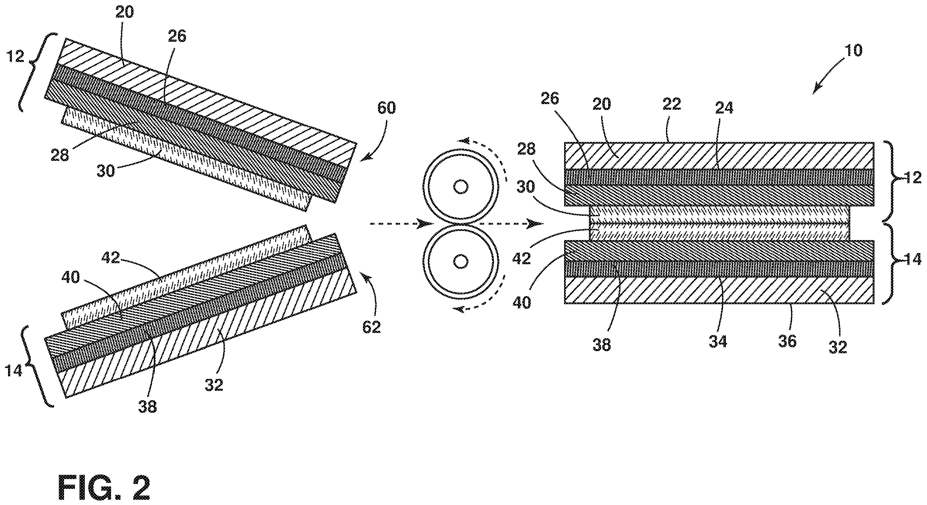

Referring to FIG. 2, each of the cathodic sub-assembly 12 and an anodic sub-assembly 14 are formed individually on a first substrate web 60 and a second substrate web 62, respectively, and brought together to form the electro-optic assembly 10. While aspects of the present disclosure are discussed with respect to exemplary embodiments in which the first substrate web 60 and second substrate web 62 are formed from polymeric materials and thus referred to as the first polymeric web 60 and the second polymeric web 62, respectively, as discussed in more detail below, the first and/or second substrate webs 60, 62 may be formed from a glass material and referred to as first and second glass webs. In one aspect, the individually formed cathodic sub-assembly 12 and an anodic sub-assembly 14 can be laminated together using heat, pressure, and/or vacuum. In another aspect, the individually formed cathodic sub-assembly 12 and an anodic sub-assembly 14 can be assembled by coupling the first substrate 20 and the second substrate 32 using the seal 52 and/or any adhesive or tie layers. As is discussed in more detail below, multiple cathodic sub-assemblies 12 and multiple anodic sub-assemblies 14 can be formed from the respective first and second polymeric webs 60 and 62, respectively, such that multiple electro-optic assemblies 10 can be formed and separated from the assembled first and second polymeric webs 60 and 62. The first polymer web 60 includes at least the first substrate 20 and optionally the first barrier layer 26 and/or the first electrically conductive layer 28. The second polymer web 62 includes at least the second substrate 32 and optionally the second barrier layer 38 and/or the second electrically conductive layer 40.

As used herein, a web refers to a continuous sheet of material having a width and length such that parts, or multiple parts (i.e., one, two, or more) can be formed from a single sheet which is either provided in a stack or in roll form. The length and/or width of the substrate web can be selected to accommodate the formation of individual or multiple parts in either or both the length and width directions. The web may have a planar cross-sectional profile in all directions; alternatively, a cross-sectional profile of the web in at least one direction may deviate from planar.

The polymeric webs 60 and 62 form at least the first substrate 20 and the second substrate 32, respectively, and thus are made from the same types of materials listed above as being suitable for forming the first and second substrates 20, 32. Non-limiting examples of suitable polymeric materials for forming the first polymeric web 60 and/or the second polymeric web 62 include polyethylene (e.g., low and/or high density), polyethylene terephthalate (PET), polyethylene naphthalate (PEN), polycarbonate, polysulfone, acrylic polymers (e.g., poly(methyl methacrylate) (PMMA)), polymethacrylates, polyimides, polyamides (e.g., a cycloaliphatic diamine dodecanedioic acid polymer, such as Trogamid^{®} CX7323)), epoxies, cyclic olefin polymers (COP) (e.g., Zeonor 1420R), cyclic olefin copolymers (COC) (e.g., Topas 60135-04 or Mitsui Apel), polymethylpentene, cellulose ester based plastics (e.g., cellulose triacetate), transparent fluoropolymer, polyacrylonitrile, other polymeric materials and/or combinations thereof. In one aspect, when the first and second substrates 20, 32 are made from glass, the corresponding first and second substrate webs 60, 62 are made from glass, rather than a polymeric material, and may be referred to as the first and second glass webs 60, 62. Non-limiting examples of suitable glass materials include borosilicate glass and soda lime glass.

### Methods

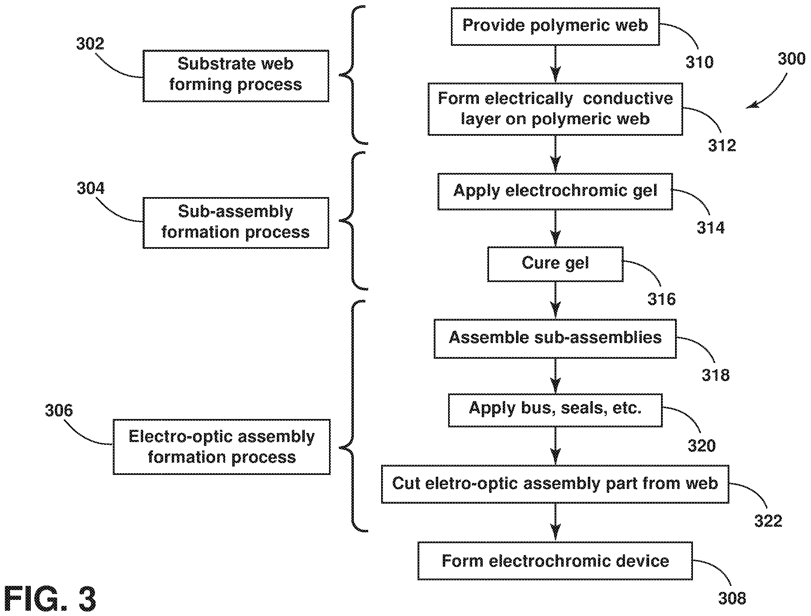

Referring now to FIGS. 3-7C, methods for forming the electro-optic cathodic and anodic sub-assemblies and methods for forming the electro-optic assembly from a pair of the cathodic and anodic sub-assemblies according to aspects of the present disclosure are provided. With reference to FIG. 3, a method 300 for forming the electro-optic assembly 10 from the cathodic sub-assembly 12 and the anodic sub-assembly 14 is provided. The method 300 may be a continuous process or may be comprised of multiple individual processing steps, between which an intermediate product is stored under appropriate conditions (e.g., in a clean room, under vacuum, in an oxygen free environment, etc.). Generally, the method 300 can be considered as including 3 process phases: a substrate web forming process 302, a sub-assembly formation process 304, an electro-optic assembly formation process 306, and optionally an electrochromic device forming process 308. The substrate web forming process 302 and the sub-assembly formation process 304 can be utilized to form each of the cathodic sub-assembly 12 and the anodic sub-assembly 14 which are combined in the electro-optic assembly formation process 306 to form the electro-optic assembly 10. The cathodic sub-assembly 12 and the anodic sub-assembly 14 can be formed according to the processes 302 and 304 either consecutively or simultaneously. The cathodic sub-assembly 12 and the anodic sub-assembly 14 may be formed at the same or different location than the electro-optic assembly 10 is formed in process 306. In one aspect, each of the processes 302, 304, and 306 may proceed immediately following the previous process in a generally continuous process of forming the cathodic and anodic sub-assemblies 12, 14 and the electro-optic assembly 10. In another aspect, the product(s) formed using one or more of the processes 302 and/or 304 may be stored for a predetermined period of time before being processed according to the next process phase 304 and/or 306. In one aspect, all of the processes 302, 304, and 306 of the method 300 are performed in the same facility; alternatively, one or more of the processes 302, 304, and/or 306 may be performed at a facility different than the other processes. It is understood that a particular sequence of steps is disclosed according to the method 300 and the 3 process phases 302, 304, and 306 of the method 300 for illustrative purposes and that the particular steps of the method 300 and any of the 3 process phases 302, 304, and 306 of the method 300 may be conducted in a different sequence or in different combinations without deviating from the spirit of the present disclosure.

Still referring to FIG. 3, the substrate web forming process 302 includes the step of providing a polymeric web at 310 and forming an electrically conductive layer on the polymeric web at 312. As discussed above, each of the cathodic sub-assembly 12 and the anodic sub-assembly 14 is formed on a polymeric web 60 and 62, respectively, that form a part of the respective substrates 20 and 32. The polymeric webs 60 and 62 can be provided as individual sheets or as a roll for storage and/or processing and can include any of the materials described above for forming the first substrate 20 and the second substrate 32. While the steps 310 and 312 are discussed in the context of forming the cathodic sub-assembly 12, it is understood that the steps 310 and 312 can be used in a similar manner to form the anodic sub-assembly 14 using the same or different materials than the cathodic sub-assembly 12, which are discussed above.

The polymeric web 60 at 310 can include the one or more barrier layers 26 or the step 310 can include a process for applying the one or more barrier layers 26 to the polymeric web 60. While the method 300 is described in the context of providing a barrier layer 26, it is understood that the barrier layer 26 can be skipped, or that elements can be incorporated into the body of the polymeric web 60 to provide barrier properties, as needed. When a barrier layer 26 is provided on the polymeric web 60, the barrier layer 26 may be laminated onto the polymeric web 60, adhered to the polymeric web 60, or integrally formed with the polymeric web 60, such as by a co-extrusion type process. The barrier layer 26 may be a single layer or multiple layers. In one aspect, the polymeric web 60 can be purchased from a supplier with the one or more barrier layers 26 formed thereon. One such example is a PET web to which a multi-layer polymer/oxide/polymer barrier layer has been applied, an example of which includes a flexible transparent barrier film sold by 3M under the trade name FTB3-125 Barrier Film. The FTB-125 Barrier Film is described by 3M as a PET substrate with two vacuum deposited polymer layers with an inorganic oxide layer positioned between the two polymer layers. The "125" in the tradename of the 3M material refers to the thickness of the substrate, in this case 125 µm. However, it is understood that alternative FTB3 products having different thicknesses can also be utilized. In another aspect, the one or more barrier layers 26 may be co-extruded or laminated with the polymeric web 60 as part of the substrate web forming process 302.

In one aspect, the polymeric web 60 can be provided with a removable interleaf layer (also referred to as a release liner) disposed over the surface on which the electrically conductive layer 28 is to be formed to protect the surface until deposition of the electrically conductive layer 28. When the polymeric web 60 includes one or more barrier layers 26, the interleaf layer can be disposed over the exposed surface of the outermost barrier layer 26. When the polymeric web 60 does not include a barrier layer 26 or prior to application of a barrier layer 26, the polymeric web 60 can be provided within an interleaf layer to protect the surface onto which the barrier layer 26 and/or the electrically conductive layer 28 is to be deposited. The interleaf layer can be applied to the surface of the polymeric web 60 or integrally formed with the polymeric web 60 to provide a peelable clean substrate. For example, a polymer resin forming the polymeric web 60 and a polymeric resin forming the interleaf layer can be co-extruded to form a substrate from which the co-extruded interleaf layer can be peeled-off to expose the underlying surface of the polymeric web 60.

In one aspect, when a barrier layer 26 is utilized, the interleaf layer can be applied over the exterior surface of the barrier layer 26 under vacuum in order to minimize the deposition of debris and/or degradation of the exposed exterior surface of the barrier layer 26 and optionally may be applied as a continuous process with the formation of the barrier layer 26 on the web 60. Optionally, the exterior surface of the barrier layer 26 may undergo a cleaning process, such as a plasma treatment, prior to application of the interleaf layer. When the interleaf layer is present, the process 302 can include a step to remove the interleaf layer prior to forming the electrically conductive layer 28. Alternatively, when the barrier layer(s) 26 and electrically conductive layer 28 are formed in a continuous process, an interleaf layer may not be necessary.

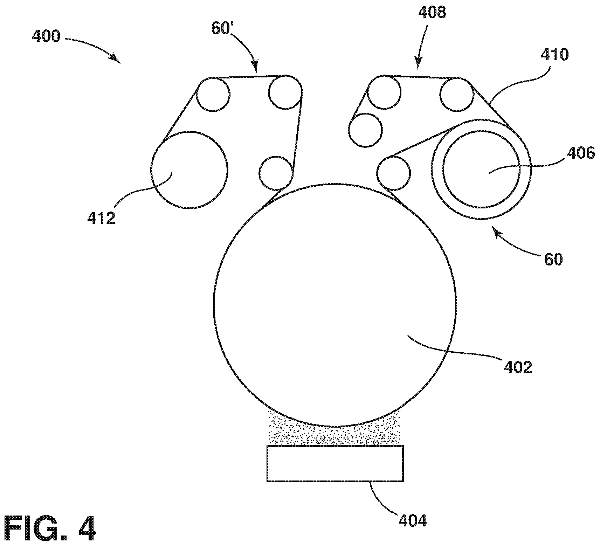

Still referring to FIG. 3, at step 312, the electrically conductive layer 28 can be formed on the polymeric web 60 over the exposed surface of the barrier layer 26 using any suitable process. FIG. 4 illustrates an exemplary roll-to-roll sputtering process 400 for forming the electrically conductive layer 28 according to an aspect of the present disclosure. The polymeric web 60 having the barrier layer 26 deposited thereon can be provided to a process drum 402 configured to expose the polymeric web 60 to a sputter source 404 for depositing the electrically conductive layer on the polymeric web 60. The polymeric web 60 can be provided on an unwinder 406, which optionally includes an interleaf layer remover 408 to remove an interleaf layer 410 from the polymeric web 60, when present. The process drum 402 moves the polymeric web 60 from the unwinder 406 past the sputter source 404 such that the outermost surface of the barrier layer 26 is exposed to the sputter source 404 for depositing the electrically conductive layer 28 onto the barrier layer 26. The nature of the materials and the control parameters of the sputtering source 404 will vary depending on the material(s) being deposited to form the electrically conductive layer 28. While only a single sputter source 404 is illustrated, aspects of the present disclosure can include more than one sputter source, optionally in separate chambers, to deposit the materials for forming the electrically conductive layer 28. Optionally, prior to depositing the electrically conductive layer 28 on the polymeric web 60, the polymeric web 60 can be degassed to inhibit water and/or oxygen from affecting the electrically conductive materials during deposition. The degassing process can include heating the polymeric web roll or sheet under vacuum or storing the polymeric web roll or sheet in an inert atmosphere at an elevated temperature.

The polymeric web 60 with barrier layer 26 and electrically conductive layer 28 deposited thereon form a substrate web 60' that can be wound into a roll on a rewinder 412 for storage or for further processing. Optionally, the step 412 can include applying an interleaf layer to an exposed surface of the electrically conductive layer 28 (not shown), to protect the exposed surface from debris and/or degradation between processing steps. The application of the interleaf layer may be conducted under vacuum and may be a continuous process with the roll-to-roll sputtering process 400 or a separate process step.

While aspects of the step 312 of forming the electrically conductive layer 28 on the polymeric web 60 to form the substrate web 60' are described in the context of a roll-to-roll process that utilizes sputtering to deposit the electrically conductive material, other forms and processes may also be utilized within the scope of the present disclosure. For example, the polymeric web 60 may be provided as individual sheets rather than a roll to provide individual sheets of the substrate web 60'. In other aspects, the conductive material may be deposited using processes other than sputtering, examples of which include chemical vapor deposition (CVD) and physical vapor deposition (PVD).

Referring again to FIG. 3, the sub-assembly formation process 304 includes applying an electrochromic gel to the substrate web 60' at 314 and then curing the electrochromic gel at 316 to form an electro-optic sub-assembly. A cathodic electrochromic gel is applied to form the cathodic sub-assembly 12 and an anodic electrochromic gel is applied to form the anodic sub-assembly 14.

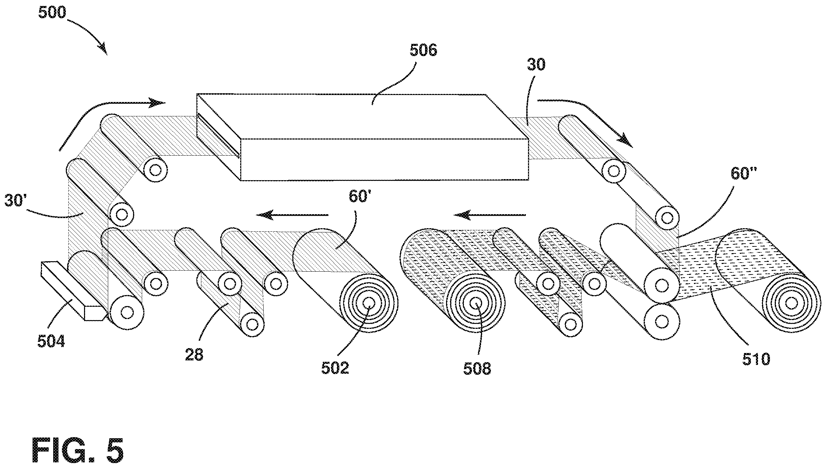

FIG. 5 illustrates an exemplary roll-to-roll process 500 for forming an electro-optic sub-assembly, including the cathodic sub-assembly 12 and/or the anodic sub-assembly 14, according to an aspect of the present disclosure. While aspects of forming the electro-optic sub-assembly at 304 are discussed in the context of forming the cathodic sub-assembly 12, it is understood that the anodic sub-assembly 14 can be formed in a similar manner using materials suitable for forming an anodic gel, as described above. Still referring to FIG. 5, the web substrate 60' formed according to the substrate web forming process 302 described above can be provided on a substrate roll 502. The web substrate 60' can be unwound from the substrate roll 502 such that the electrically conductive layer 28 is exposed for application of a gel composition at a coating station 504. When the electrically conductive layer 28 is covered by an interleaf layer, the process 500 can include an interleaf layer removal station (not shown) to remove the interleaf layer prior to passing the web substrate 60' through the coating station 504. Optionally, removal of the interleaf layer and/or the entire roll-to-roll process 500 can be performed in a clean room to minimize debris, static, etc. Optionally, prior to passing the web substrate 60' through the coating station 504, the exposed surface of the electrically conductive layer 28 can be treated to remove impurities and/or defects, non-limiting examples of which include a heat treatment or a plasma treatment.

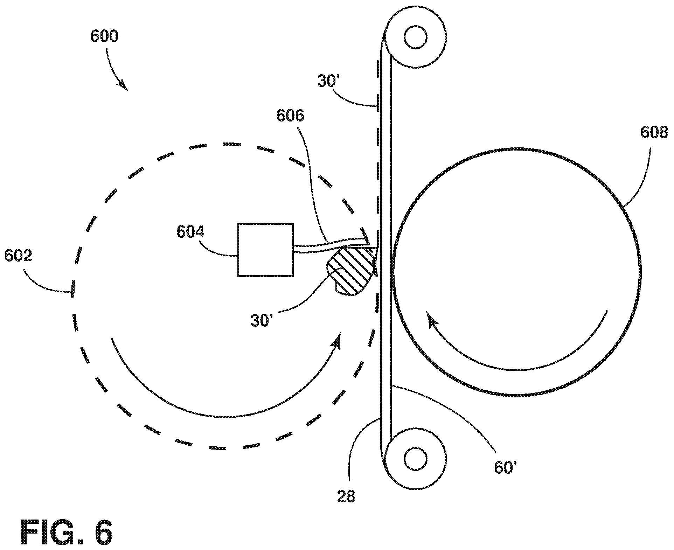

Referring to FIGS. 5 and 6, the coating station 504 can be configured to apply an electroactive gel composition that includes at least one electroactive component dispersed within a polymeric matrix and a solvent, and optional additives as discussed above with regards to forming the cathodic gel layer 30 and the anodic gel layer 42. When forming the cathodic sub-assembly 12, the electroactive gel composition will be a cathodic gel composition including at least one cathodic component. When forming the anodic sub-assembly 14, the electroactive gel composition will be an anodic gel composition including at least one anodic component. The coating station 504 can be any suitable type of equipment for applying a layer or layers of gel compositions to the substrate web 60', such as a slot die for extrusion, a lamination system, a screen printing system, drawdown bars, Mayer rods (rod coating), gravure printing, a sol-gel process, spin coating, die casting, dip coating, or inkjet printing, for example. Furthermore, it is understood that the shape of the part and/or a thickness of the gel layer may be defined by depositing the layer according to one or more of the methods listed above (or other suitable methods) through a stencil disposed on the substrate. The stencil may be removed before or after curing of the gel. FIG. 6 illustrates an exemplary coating station 504 in the form of a screen printing system 600, according to an aspect of the present disclosure. The screen printing system can include a rotating screen 602 that includes a dispenser 604 and squeegee 606 and an impression cylinder 608 for printing a cathodic gel composition 30' onto the exposed surface of the electrically conductive layer 28. The screen printing system 600 is configured to apply the cathodic gel composition 30' at a desired thickness and temperature based on the desired characteristics of the cathodic gel layer 30 to be formed.

In one aspect, the cathodic and anodic gel compositions are configured to be suitable for deposition using the desired type of equipment. For example, when a screen printing system is utilized, it may be advantageous to form the cathodic and anodic gel compositions having a viscosity suitable for the screen printing equipment. In one aspect, the cathodic and anodic gel compositions are screen printing compositions have a minimum viscosity of about 1200 centipoise (cP) and/or a minimum solids content of about 20%. The cathodic and anodic gel compositions can be modified by adjusting the solids content and/or adding suitable additives to provide the cathodic and anodic gel compositions with the desired characteristics. The cathodic and gel compositions may include pre-polymerized polymers dispersed and/or dissolved in a solvent and/or polymerization may be initiated after application of the gel compositions to the substrate web 60'.

Optionally, the substrate web 60' can be provided with a mask to facilitate depositing and/or maintaining the deposited cathodic and/or anodic gel compositions in a desired shape corresponding to a desired final shape of the cathodic and/or gel layers 30, 42.

Referring again to FIG. 5, the substrate web 60' with the cathodic gel composition 30' applied thereon is then passed to a curing station 506 to cure the cathodic gel composition 30' to form the cathodic layer 30 on the substrate web 60', thus forming a cathodic sub-assembly web 60". The nature of the curing station 506 will be based on the components of the cathodic gel composition 30'. For example, the curing station 506 may be a heat, an e-beam, and/or an ultraviolet light curing station depending on whether the polymeric material in the cathodic gel composition 30' is thermally cross-linkable and/or cross-linkable upon exposure to ultraviolet light. Parameters of the curing station 506, such as time, temperature, ultraviolet light exposure, etc., can be set based on characteristics of the applied cathodic gel composition 30', non-limiting examples of which include the polymeric material, solvent, additives, thickness of the cathodic gel composition layer, desired degree of gelling, and desired thickness of the cured cathodic gel layer. In one aspect, the curing process is implemented in an environment that is low or free of oxygen. In one aspect, the curing process is implemented under nitrogen gas and/or in the presence of filtered air. Optionally, the method may include a leveling step, prior to curing. The leveling step can include exposing the deposited gel layer to a hold period in which surface irregularities in the thickness of the layer may be allowed to dissipate through flowing or other means. The hold period may be implemented at temperatures that are higher than the deposition temperature of the gel layer, but below the cure temperature of the gel layer in order to facilitate leveling of the layer, such as by increasing a rate of leveling.

The cathodic gel layer 30 can be formed from the deposition of a single layer of a cathodic gel composition or from the deposition of multiple sub-layers of one or more cathodic gel compositions. In one aspect, the cathodic gel layer 30 can be formed by the sequential deposition of two or more sub-layers of a cathodic gel. Each deposited sub-layer may have the same or different composition. In one aspect, the curing step occurs after the deposition of all of the sub-layers. Optionally, one or more of the sub-layers may be cured prior to deposition of the next sub-layer. The anodic gel layer 42 can be formed in a similar manner using appropriate anodic gel compositions.

Following the curing station 506, the cathodic sub-assembly web 60" formed thereon can be wound onto a cathodic sub-assembly roll 508. Optionally, an interleaf layer 510 can be applied to an exposed surface of the cathodic gel layer 30 prior to winding the cathodic sub-assembly web 60" on the cathodic sub-assembly roll 508. The cathodic sub-assembly web 60" can be stored for future use or used immediately in further processing steps. While the formation of the cathodic sub-assembly web 60" is described in the context of a roll-to-roll process, it is understood that the cathodic sub-assembly could be formed in a similar manner using individual sheets of the web 60'. Formation of the anodic sub-assembly web can proceed in any of the roll-to-roll or individual sheet processes described with respect to the formation of the cathodic sub-assembly web 60", except for with components suitable for forming an anodic gel composition. Parameters of the anodic gel composition application and the curing process may be different than those described for the cathodic gel composition based on characteristics such as the components of the anodic gel composition, a thickness of the anodic gel composition layer, a desired degree of gelling, and a desired thickness of the cured anodic gel layer, for example. In one aspect, the cathodic and anodic sub-assembly webs can be formed simultaneously on parallel systems and further processed in a continuous process. In another aspect, one or both of the cathodic and anodic sub-assembly webs can be formed and stored prior to additional processing.

In this manner, the steps 314 and 316 of the sub-assembly formation process 304 can be repeated for both the cathodic sub-assembly web formation and the anodic sub-assembly web formation. Forming the cathodic sub-assembly 12 and the anodic sub-assembly 14 in separate processes on separate webs allows the materials and processing conditions to be selected based on the individual characteristics of each of the cathodic sub-assembly 12 and the anodic sub-assembly 14. For example, because each of the cathodic sub-assembly 12 and the anodic sub-assembly 14 are cured separately, the curing parameters at 316 can be set based on the materials forming each individual sub-assembly, allowing for independent tuning or optimizing of conditions for each of the cathodic sub-assembly 12 and the anodic sub-assembly 14. In addition, forming the cathodic sub-assembly 12 and the anodic sub-assembly 14 separately allows each of the cathodic gel layer 30 and the anodic gel layer 42 to be stored separately until they are to be sealed in the electro-optic assembly 10. One or both of the cathodic gel layer 30 and/or the anodic gel layer 42 can include components that may be sensitive to moisture, oxygen, and/or light. For some materials, this sensitivity may be increased when the cathodic and anodic components are in contact with one another. Forming the cathodic sub-assembly 12 and the anodic sub-assembly 14 independently of each can facilitate protecting sensitive components from damage/degradation until the sub-assemblies 12, 14 are sealed together.

According to one aspect of the present disclosure, the electrochromic gel composition applied at step 314 can be applied as a continuous layer across at least a portion of the width of the substrate web. According to another aspect of the present disclosure, the electrochromic gel composition applied at step 314 is applied in a pattern on the substrate web 60' based on a shape of the part to be formed.

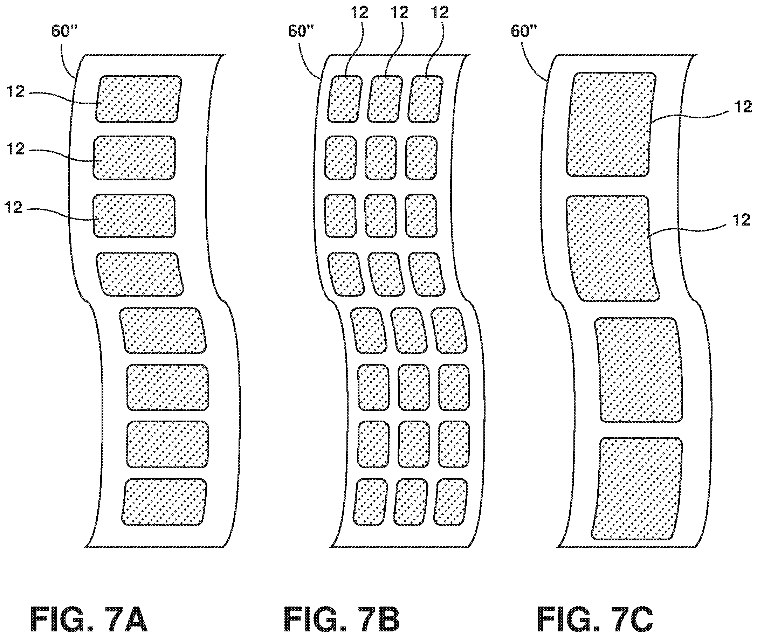

Referring to FIGS. 7A-7C, exemplary patterns for applying the electrochromic gel formation to the substrate web are illustrated. As illustrated in FIGS. 7A-7C, the cathodic gel layer 30 can be applied to the substrate web 60' such that each cathodic sub-assembly 12 has a predetermined shape. In one aspect, the predetermined shape can correspond to a final part shape of the electro-optic assembly 10. The dimensions and orientation of the cathodic sub-assembly pattern can be based on the final part dimensions and the dimensions of the substrate web 60". Forming the electrochromic gel layer in a pattern on the substrate web can reduce waste with respect to the materials forming the cathodic gel layer 30 and the anodic gel layer 42. As discussed above, screen printing is one exemplary method for applying the electrochromic gel compositions which can be controlled to print the gel compositions with tolerances suitable for forming patterns of the cathodic and/or anodic sub-assemblies 12 and/or 14. Optionally, one or more additional elements of the cathodic and/or anodic sub-assemblies 12, 14, such as the first and second barrier layers 26, 38 and/or the first and second electrically conductive layers 28,40, respectively, can also be applied in a pattern to reduce waste of these components.

Referring again to FIG. 3, the cathodic sub-assembly web and anodic sub-assembly web formed in process 304 are combined according to the electro-optic assembly formation process 306 to form the electro-optic assembly 10. At step 318, the cathodic sub-assembly web and anodic sub-assembly web are assembled together to form an electro-optic sub-assembly web. In one aspect, the assembly step 318 can be a lamination step that includes the application of heat and/or pressure to assemble the cathodic sub-assembly 12 and the anodic sub-assembly 14 together. In another aspect, the assembly step 318 includes bringing the cathodic sub-assembly 12 and the anodic sub-assembly 14 together using one or more adhesive layers, tie layers, and/or seal layers. Optionally, the assembly step 318 is performed in an inert atmosphere (e.g., under nitrogen gas) or under vacuum. When one or both of the cathodic sub-assembly web and/or the anodic sub-assembly web formed in process 304 include an interleave layer, the interleaf layer is removed prior to the assembly step at 318.

When the cathodic sub-assembly 12 and the anodic sub-assembly 14 are patterned on their respective substrate webs, the assembly step 318 can include an alignment step by which the cathodic sub-assembly 12 and the anodic sub-assembly 14 patterns are aligned such that at least a portion of the cathodic sub-assembly 12 overlaps with at least a portion of the anodic sub-assembly 14. In some aspects, the cathodic sub-assembly 12 and the anodic sub-assembly 14 can be aligned such that at least one edge of the cathodic sub-assembly 12 and at least one edge of the anodic sub-assembly 14 are offset from one another. In some aspects, one of the cathodic sub-assembly 12 or the anodic sub-assembly 14 has at least one dimension that is larger than a corresponding dimension of the other of the cathodic sub-assembly 12 or the anodic sub-assembly 14 such that at least one pair of sub-assembly edges is offset.

In one aspect, the assembly formation process 306 can include an optional degassing step to remove air trapped as bubbles in one or both of the cathodic gel layer 30 and the anodic gel layer 42. During assembly, such as by lamination, bubbles can be trapped between the cathodic and anodic gel layers 30, 42. In some aspects, a vacuum is applied after lamination to draw the bubbles laterally along an interface between the cathodic and anodic gel layers 30, 42 to remove them from the system. In one aspect, the cathodic gel layer 30 and the anodic gel layer 42 are formed such that they have sufficient rigidity and/or solids content to facilitate movement of the bubbles at the interface between the cathodic and anodic gel layers 30, 42 and out of the system. The degree of polymeric reaction and/or cross-linking density may be adjusted to provide sufficient rigidity suitable for a degassing step. In another aspect, bubble formation can be minimized or eliminated by lamination the cathodic gel layer 30 and the anodic gel layer 42 in a vacuum sealed chamber at sub-atmospheric pressures.

At step 320, one or more seals, electrical busses, etc..., can be applied to the aligned cathodic sub-assembly 12 and the anodic sub-assembly 14. All or some portions of the step 320 can occur prior to, subsequent to, or concurrently with the assembly step 318. In some aspects, an electrical bus and at least the seal 52 are provided between the cathodic sub-assembly 12 and the anodic sub-assembly 14 prior to applying heat and/or pressure to laminate the sub-assemblies at 318. At step 322, a shaped part can be cut from the aligned cathodic and anodic sub-assembly webs to form each electro-optic assembly 10. The shaped part can be cut using a laser or other suitable methods. The step 322 can occur before or after lamination of the aligned cathodic and anodic sub-assembly webs. Additional seals may optionally be applied after cutting the electro-optic assembly 10 from the aligned cathodic and anodic sub-assembly webs. The electro-optic assemblies 10 can be stored for future use or optionally further processed with additional components to form an electrochromic device at step 30.

Some or all of the steps of the method 300 can be performed in an inert atmosphere and/or under vacuum. In one aspect, one or more of the substrate web forming process 302, the sub-assembly formation process 304, and the electro-optic assembly formation process 306 may be formed in a continuous process maintained in an inert atmosphere or under vacuum. In another aspect, one or more of the substrate web forming process 302, the sub-assembly formation process 304, and the electro-optic assembly formation process 306 may be conducted individual in an inert atmosphere or under vacuum and care may be taken to maintain an inert atmosphere or vacuum during storage and/or transition between the processes 302, 304, and 306 or between individual steps of each process 302, 304, and 306.

The electro-optic assemblies of the present disclosure can be utilized in a variety of devices to provide the device with electrochromic features, non-limiting examples of which include interior and exterior mirror assemblies, sunroofs, architectural windows, vehicle windows, airplane windows, etc...

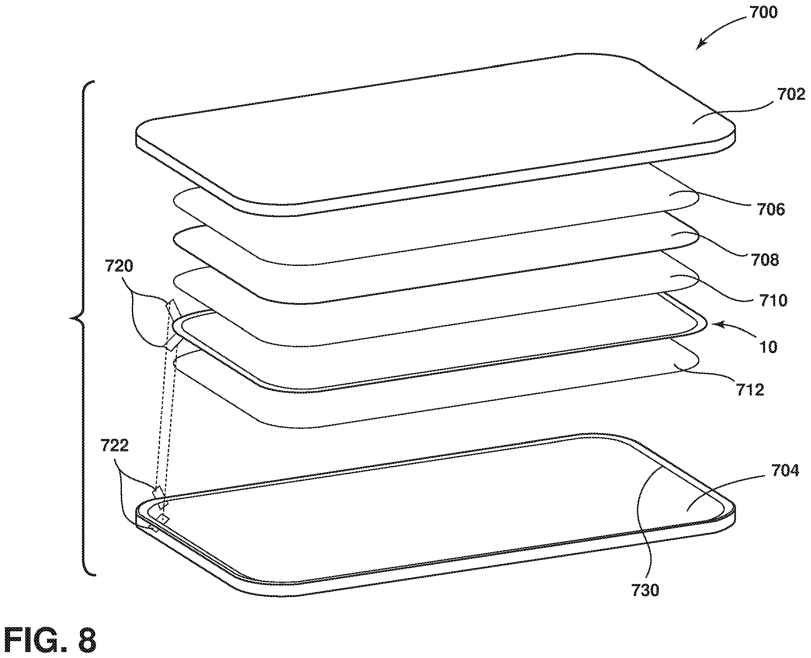

Referring to FIG. 8, an exemplary electrochromic device incorporating the electro-optic assembly 10 is illustrated in the form of a sunroof 700. The sunroof 700 includes first and second glass panes 702 and 704, the electro-optic assembly 10, and one or more additional layers 706, 708, 710, and 712, non-limiting examples of which include a solar control film, structural support layers, laminating layers, filtering layers, etc... Non-limiting examples of laminating layer materials include ethylene-vinyl acetate (EVA), polyurethane, and polyvinylbutyral (PVB). The electro-optic assembly 10 can include electrical connectors 720 which are electrically coupled with the first and second electrically conductive layers 28, 40 through the electrical bus of the electro-optic assembly 10. The electrical connectors 720 can be configured to electrically couple with additional electrical connectors 722 of the sunroof 700 such that an electrical potential can be applied across the first and second electrically conductive layers 28, 40 by an external power source (not shown). The sunroof 700 can include a primary seal 730 that seals the internal layers 706-712 and the electro-optic assembly 10 between the glass panes 702, 704.

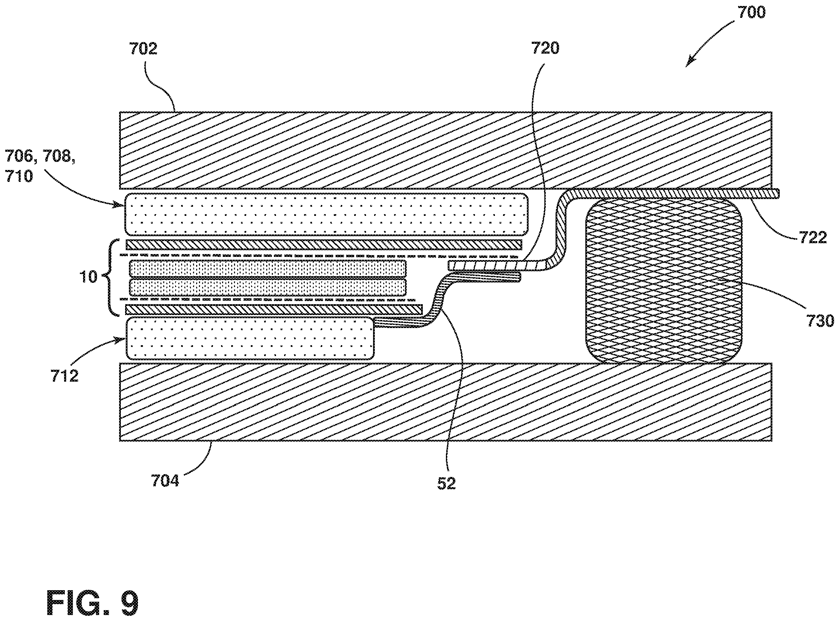

FIG. 9 illustrates a cross-sectional schematic of one example of a configuration of the sunroof 700 according to an aspect of the present disclosure. In the exemplary configuration of FIG. 9, the seal 52 is in the form of a tape sealant that forms a perimeter seal around the electro-optic assembly 10 and around the electrical connector 720 that extends into the electro-optic assembly 10 and is electrically coupled with the first and second electrically conductive surfaces. The electrical connector 720 is electrically coupled with additional electrical connector 722 that extends beyond the primary seal 730 of the sunroof 700 for connection with an external power source (not shown).

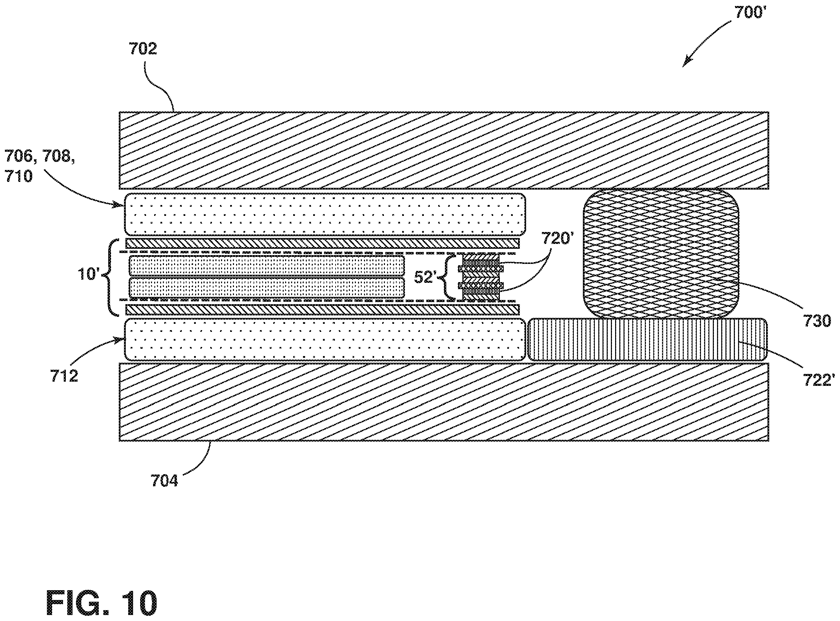

FIG. 10 illustrates an alternative sunroof configuration 700', which is similar to the sunroof 700, but which has some differences, such as with regard to the electrical connectors. Therefore, like components are labeled with the same reference numerals as those of FIGS. 8 and 9. The sunroof 700' of FIG. 10 includes an electro-optic assembly 10' that is similar to the electro-optic assembly 10 described herein except that the seal 52' is a multi-layer component include electrically conductive components 720', which may be in the form of conductive metal strips (e.g., copper), dielectric layers, and oxygen-resistant, pressure-sensitive adhesive layers. The sunroof electrical connector 722' is in the form of a conductive epoxy which is provided to electrically couple the electrically conductive components 720' of the seal 52' with an external power source (not shown). The device may include one or more additional components, not shown. For example, one or more additional components may be provided to electrically connect electrically conductive components 720' with the electrical connector 722'.

The following examples describe various features and advantages provided by the disclosure, and are in no way intended to limit the aspects of the present disclosure and appended claims.

### Examples

Tables 1 and 2 below illustrate exemplary compositions for forming a cathodic gel layer and an anodic gel layer, respectively, according to aspects of the present disclosure suitable for forming the cathodic sub-assembly 12 and the anodic sub-assembly 14. The "Matrix Co-polymer" used in the cathodic and anodic gel layer compositions to form the polymeric matrix was a randomly polymerized 1:10 molar ratio of 2-hydroxyethylmethacrylate and methyl acrylate. A 22 wt.% stock solution of the formed co-polymer was prepared in a propylene carbonate solvent and used to form the cathodic gel layer and the anodic gel layer according to Tables 1 and 2 below, respectively.

**Table 1: Cathodic Gel Layer Composition**

| Component | Molecular Weight (g/mol) | Concentration | Mass | Weight % |
|---|---|---|---|---|
| Octylviologen bis(tetrafluoroborate) | 556.2 | 32 mM | 0.890 g | 1.63 |
| Decamethyl ferrocenium tetrafluoroborate | 413.1 | 0.5 mM | 0.010 g | 0.02 |
| Matrix Co-polymer | | 19.6 wt.% | 53.45 g | 98.0 |
| Propylene carbonate (PC) | | | 0.191 g | 0.35 |
| Dibutyltin diacetate (1% solution in PC) | | 10 ppm | 50.4 µL | 54.5 |
| Methylene diphenyl diisocyanate (MDI) | | 0.28 wt.% | 0.168 g | 3.08 |
| Propylene carbonate (PC) | | | 5.286 | |

**Table 2: Anodic Gel Layer Composition**

| Component | Molecular Weight (g/mol) | Concentration (mM) | Mass | Weight % |
|---|---|---|---|---|
| 5,10-dihydro-5,10-dimethylphenazine | 210.3 | 27 mM | 0.284 | 0.52 |
| Decamethyl ferrocenium tetrafluoroborate | 326.3 | 0.5 mM | 0.008 | 0.01 |
| Matrix Co-polymer | | 19.6 wt.% | 53.45 | 98.0 |
| Propylene carbonate (PC) | | | 0.799 g | 1.46 |
| Dibutyltin diacetate (1% solution in PC) | | 10 ppm | 50.42 µL | 54.54 |
| Methylene diphenyl diisocyanate (MDI) in PC | | 0.28 wt.% | 0.168 | 3.08 |
| Propylene carbonate (PC) | | | 5.286 | |

According to the claimed invention, there is provided a cathodic electro-optic sub-assembly as defined in appended independent claim 1 as well as an anodic electro-optic sub-assembly as defined in appended independent claim 9.

Optionally, the electro-optic sub-assembly further includes a release liner disposed over the electroactive gel layer.

Optionally, the electroactive gel layer forms a pattern on the electrically conductive layer.

Optionally, the substrate web is a polymeric web including a material selected polyethylene polymer, polyethylene terephthalate (PET), a polyethylene naphthalate (PEN), polycarbonate, polysulfone polymer, acrylic polymer, poly(methyl methacrylate) (PMMA), polymethacrylate polymer, polyimide polymer, polyamide polymer, cycloaliphatic diamine dodecanedioic acid polymer, epoxy polymer, cyclic olefin polymer, cyclic olefin copolymers (COC), polymethylpentene polymer, cellulose ester based polymer, cellulose triacetate, transparent fluoropolymer, polyacrylonitrile polymer, and combinations thereof.

Optionally, the substrate web is a glass web including a material selected from borosilicate glass and soda lime glass.

Optionally, the electro-optic sub-assembly further includes at least one barrier layer disposed between the substrate web and the electrically conductive layer, wherein the at least one barrier layer is resistant to at least one of oxygen and water.

Optionally, the at least one barrier layer includes a polymer-inorganic layer-polymer stack or an insulator-metal-insulator (IMI) stack.

Optionally, the electrically conductive layer includes at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, an indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

Optionally, the electroactive component is covalently bonded to the polymeric matrix.

There is further generally described herein an electro-optic assembly which includes a cathodic sub-assembly and an anodic sub-assembly. The cathodic sub-assembly includes a first substrate web, a first electrically conductive layer disposed on the first substrate web, and a cathodic gel layer disposed on the first electrically conductive layer, wherein the cathodic gel layer includes an cathodic component dispersed in a polymeric matrix, the cathodic gel layer having a thickness. The anodic sub-assembly includes a second substrate web, a second electrically conductive layer disposed on the second substrate web, and an anodic gel layer disposed on the second electrically conductive layer, wherein the anodic gel layer includes an anodic component dispersed in a polymeric matrix, the anodic gel layer having a thickness. At least one of the cathodic component and the anodic component is electro-optic, and a thickness variation of at least one of the cathodic gel layer and the anodic gel layer comprises less than about 20% of an average thickness of the respective gel layer.

Optionally, the cathodic gel layer forms a pattern on the first electrically conductive layer and the anodic gel layer forms a pattern on the second electrically conductive layer.

Optionally, the cathodic component includes at least one material selected from a viologen, metal oxide, methyl viologen, octyl viologen, benzyl viologen, polymeric viologen, ferrocenium, tungsten oxide, vanadium oxide, nickel oxide, a perovskite, samarium nickelate, and metal oxide of the formula A_{y}B_{z}Oₓ, wherein A and B are metals, y is 1 ≤ y ≤ 20, z is 1 ≤ z ≤ 20, and x is from about 80% to about 120% of stoichiometry.

Optionally, the anodic component includes at least one at least one material selected from a metallocene, 5,10-dihydrophenazines, phenothiazines, phenoxazines, carbazoles, triphendioxazines, triphenodithiazines, ferrocene, substituted ferrocenes, substituted ferrocenyl salts, phenazine, substituted phenazines, substituted phenothiazines, substituted dithiazines, thianthrene, and substituted thianthrenes, di-tert-butyl-diethylferrocene, 5,10-dimethyl-5,10-dihydrophenazine (DMP), bis(triethylaminopropyl) dihydrophenazine bis(tetrafluoroborate), 3,7,10-trimethylphenothiazine, 2,3,7,8-tetramethoxy-thianthrene, 10-methylphenothiazine, tetramethylphenazine (TMP), 5,10-triethylammoniumpropylphenazine, bis(butyltriethylammonium)-para-methoxytriphenodithiazine (TPDT), and 5,10-dineopentyl-5,10-dihydro-2,7-di-isobutylphenazine.

Optionally, wherein the first substrate web, the second substrate web, or both include a polymeric material selected from polyethylene polymer, polyethylene terephthalate (PET), polyethylene naphthalate (PEN), polycarbonate, polysulfone polymer, acrylic polymer, poly(methyl methacrylate) (PMMA), polymethacrylate polymer, polyimide polymer, polyamide polymer, cycloaliphatic diamine dodecanedioic acid polymer, epoxy polymer, cyclic olefin polymer, cyclic olefin copolymers (COC), polymethylpentene polymer, cellulose ester based polymer, cellulose triacetate, transparent fluoropolymer, polyacrylonitrile polymer, and combinations thereof.

Optionally, electro-optic assembly further includes at least one first barrier layer disposed between the first substrate web and the first electrically conductive layer and at least one second barrier layer disposed between the second substrate web and the second electrically conductive layer. The at least one first barrier layer and the at least one second barrier layer are resistant to at least one of oxygen and water.

Optionally, the at least one first barrier layer, the at least one second barrier layer, or both includes a polymer-inorganic layer-polymer stack or an insulator-metal-insulator (IMI) stack.

Optionally, the first electrically conductive layer, the second electrically conductive layer, or both comprises at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

Optionally, the first substrate web, the second substrate web, or both comprises a glass material selected from borosilicate glass and soda lime glass.

There is further generally described herein a method of forming an electro-optic sub-assembly. The method includes applying an electroactive gel composition on the electrically conductive layer, wherein the electroactive gel composition includes an electroactive component dispersed in a polymeric matrix. The electroactive gel composition is cured to form an electroactive gel layer on the electrically conductive layer

Optionally, the applying an electroactive gel composition includes applying the electroactive gel in a pattern on the electrically conductive layer.

Optionally, the polymeric web further includes at least one barrier layer disposed between the polymeric web and the electrically conductive layer, wherein the at least one barrier layer is resistant to at least one of oxygen and water.

Optionally, the at least one barrier layer includes a polymer-inorganic layer-polymer stack or an insulator-metal-insulator (IMI) stack

Optionally, the method further includes applying a release liner over the electroactive gel layer.

Optionally, the electroactive component includes an anodic component or a cathodic component.

Optionally, the electrochromic component includes at least one cathodic component that is electrochromic, the at least one cathodic component including a material selected from a viologen, metal oxide, methyl viologen, octyl viologen, benzyl viologen, polymeric viologen, ferrocenium, tungsten oxide, vanadium oxide, nickel oxide, a perovskite, samarium nickelate, and metal oxide of the formula A_{y}B_{z}Oₓ, wherein A and B are metals, y is 1 ≤ y ≤ 20, z is 1 ≤ z ≤ 20, and x is from about 80% to about 120% of stoichiometry; or the electrochromic component includes at least one anodic component that is electrochromic, the at least one anodic component including a material selected from a metallocene, 5,10-dihydrophenazines, phenothiazines, phenoxazines, carbazoles, triphendioxazines, triphenodithiazines, ferrocene, substituted ferrocenes, substituted ferrocenyl salts, phenazine, substituted phenazines, substituted phenothiazines, substituted dithiazines, thianthrene, substituted thianthrenes, di-tert-butyl-diethylferrocene, 5,10-dimethyl-5,10-dihydrophenazine (DMP), bis(triethylaminopropyl) dihydrophenazine bis(tetrafluoroborate), 3,7,10-trimethylphenothiazine, 2,3,7,8-tetramethoxy-thianthrene, 10-methylphenothiazine, tetramethylphenazine (TMP), 5,10-triethylammoniumpropylphenazine, bis(butyltriethylammonium)-para-methoxytriphenodithiazine (TPDT), and 5,10-dineopentyl-5,10-dihydro-2,7-di-isobutylphenazine.

Optionally, the substrate web is a polymeric web including a material selected from polyethylene polymer, polyethylene terephthalate (PET), a polyethylene naphthalate (PEN), polycarbonate, polysulfone polymer, acrylic polymer, poly(methyl methacrylate) (PMMA), polymethacrylate polymer, polyimide polymer, polyamide polymer, cycloaliphatic diamine dodecanedioic acid polymer, epoxy polymer, cyclic olefin polymer, cyclic olefin copolymers (COC), polymethylpentene polymer, cellulose ester based polymer, cellulose triacetate, transparent fluoropolymer, polyacrylonitrile polymer, and combinations thereof.

Optionally, the substrate web is a glass web including a material selected from borosilicate glass and soda lime glass.

Optionally, the electrically conductive layer includes at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, an indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

Optionally, the curing the electroactive gel composition includes at least one of heating the electroactive gel composition and exposing the electroactive gel composition to ultraviolet light.

Optionally, the substrate web further includes a release liner disposed over the electrically conductive layer, wherein the method further includes removing the release liner prior to the applying an electroactive gel composition on the electrically conductive layer.

Optionally, the providing a substrate web includes unrolling a roll of the substrate web.

Optionally, the electroactive gel composition is applied in one of a screen printing process, extrusion process, laminating process, gravure printing process, rod coating process, drawdown bar process, sol-gel process, spin coating process, die casting process, dip coating process, and inkjet printing process.

There is further generally described herein a method of forming an electro-optic assembly. The method includes providing a cathodic sub-assembly and an anodic sub-assembly. The cathodic sub-assembly includes a first substrate web, a first electrically conductive layer disposed on the first substrate web, and a cathodic gel layer disposed on the first electrically conductive layer, wherein the cathodic gel layer includes a cathodic component dispersed in a polymeric matrix, the cathodic gel layer having a thickness. The anodic sub-assembly includes a second substrate web, a second electrically conductive layer disposed on the second substrate web, and an anodic gel layer disposed on the second electrically conductive layer, wherein the anodic gel layer includes an anodic component dispersed in a polymeric matrix, the anodic gel layer having a thickness. The cathodic sub-assembly is assembled with the anodic sub-assembly to form an electro-optic sub-assembly web. A shaped part is cut from the electro-optic sub-assembly web corresponding to a shape of the electro-optic assembly. At least one of the cathodic component or anodic component is electro-optic and a thickness variation of at least one of the cathodic gel layer and the anodic gel layer comprises less than about 20% of an average thickness of the respective gel layer.

Optionally, the first substrate web includes at least one first barrier layer disposed between the first substrate web and the first electrically conductive layer and the second substrate web includes at least one second barrier layer disposed between the second substrate web and the second electrically conductive layer. The at least one first barrier layer and the at least one second barrier layer are resistant to at least one of oxygen and water.

Optionally, the at least one first barrier layer, the at least one second barrier layer, or both comprise a polymer-inorganic layer-polymer stack or an insulator-metal-insulator (IMI) stack.

Optionally, the cathodic gel layer and the anodic gel layer each comprise a release liner. The method further includes prior to the step of assembling the cathodic sub-assembly and the anodic sub-assembly, removing the release liner from the cathodic gel layer and removing the release liner from the anodic gel layer.

Optionally, the cathodic gel layer is present in a pattern corresponding to the shaped part and the anodic gel layer is present in a pattern corresponding to the shaped part. The method further includes aligning the cathodic gel layer pattern with the anodic gel layer pattern prior to the step of assembling the cathodic sub-assembly and the anodic sub-assembly. Wherein the step of cutting a shaped part from the electro-optic sub-assembly web includes cutting the aligned cathodic gel layer pattern and the anodic gel layer pattern.

Optionally, the method further includes applying an electrical bus to a portion of the electro-optic sub-assembly web from which the shaped part is cut one of concurrent with or subsequent to the step of assembling the cathodic sub-assembly and the anodic sub-assembly.

Optionally, the cathodic sub-assembly is provided as a first roll and the anodic sub-assembly is provided as a second roll.

Optionally, the cathodic component includes at least one material selected from a viologen, metal oxide, methyl viologen, octyl viologen, benzyl viologen, polymeric viologen, ferrocenium, tungsten oxide, vanadium oxide, nickel oxide, a perovskite, samarium nickelate, and metal oxide of the formula A_{y}B_{z}Oₓ, wherein A and B are metals, y is 1 ≤ y ≤ 20, z is 1 ≤ z ≤ 20, and x is from about 80% to about 120% of stoichiometry.

Optionally, the anodic component comprises at least one material selected from a metallocene, 5,10-dihydrophenazines, phenothiazines, phenoxazines, carbazoles, triphendioxazines, triphenodithiazines, ferrocene, substituted ferrocenes, substituted ferrocenyl salts, phenazine, substituted phenazines, substituted phenothiazines, substituted dithiazines, thianthrene, and substituted thianthrenes, di-tert-butyl-diethylferrocene, 5,10-dimethyl-5,10-dihydrophenazine (DMP), bis(triethylaminopropyl) dihydrophenazine bis(tetrafluoroborate), 3,7,10-trimethylphenothiazine, 2,3,7,8-tetramethoxy-thianthrene, 10-methylphenothiazine, tetramethylphenazine (TMP), 5,10-triethylammoniumpropylphenazine, bis(butyltriethylammonium)-para-methoxytriphenodithiazine (TPDT), and 5,10-dineopentyl-5,10-dihydro-2,7-di- isobutylphenazine.

Optionally, the first substrate web, the second substrate web, or both comprise a polymeric material selected from polyethylene polymer, polyethylene terephthalate (PET), polyethylene naphthalate (PEN), polycarbonate, polysulfone polymer, acrylic polymer, poly(methyl methacrylate) (PMMA), polymethacrylate polymer, polyimide polymer, polyamide polymer, cycloaliphatic diamine dodecanedioic acid polymer, epoxy polymer, cyclic olefin polymer, cyclic olefin copolymers (COC), polymethylpentene polymer, cellulose ester based polymer, cellulose triacetate, transparent fluoropolymer, polyacrylonitrile polymer, and combinations thereof.

Optionally, the first electrically conductive layer, the second electrically conductive layer, or both comprises at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

Modifications of the disclosure will occur to those skilled in the art and to those who make or use the concepts disclosed herein. Therefore, it is understood that the embodiments shown in the drawings and described above are merely for illustrative purposes and not intended to limit the scope of the disclosure, which is defined by the following claims.

It will be understood by one having ordinary skill in the art that construction of the described concepts, and other components, is not limited to any specific material. Other exemplary embodiments of the concepts disclosed herein may be formed from a wide variety of materials, unless described otherwise herein.

For purposes of this disclosure, the term "coupled" (in all of its forms: couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature, or may be removable or releasable in nature, unless otherwise stated.

It is also important to note that the construction and arrangement of the elements of the disclosure, as shown in the exemplary embodiments, is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts, or elements shown as multiple parts may be integrally formed, the operation of the interfaces may be reversed or otherwise varied, the length or width of the structures and/or members or connector or other elements of the system may be varied, and the nature or numeral of adjustment positions provided between the elements may be varied. It should be noted that the elements and/or assemblies of the system may be constructed from any of a wide variety of materials that provide sufficient strength or durability, in any of a wide variety of colors, textures, and combinations. The scope of the claimed invention is defined by the appended **claims.**

It will be understood that any described processes, or steps within described processes, may be combined with other disclosed processes or steps. The exemplary structures and processes disclosed herein are for illustrative purposes and are not to be construed as limiting.

## Claims

1. A cathodic electro-optic sub-assembly, comprising:
a first substrate web;
a first electrically conductive layer disposed on the first substrate web; and
an electrochromic cathodic gel layer disposed on the first electrically conductive layer, wherein the electrochromic cathodic gel layer is formed as a free-standing gel that includes at least one solvent and a cross-linked polymeric matrix in which an electrochromic cathodic component is dispersed, the electrochromic cathodic gel layer comprising a thickness in a range of 20 µm to 500 µm,
wherein a thickness variation of the electrochromic cathodic gel layer comprises less than about 20% of an average thickness of the electrochromic cathodic gel layer,
wherein the amount of polymeric matrix in the electrochromic cathodic gel layer is 20 wt.% to 50 wt.%, and
wherein the cathodic electro-optic sub-assembly is configured to be assembled with an anodic electro-optic sub-assembly to form an electrochromic assembly, the anodic electro-optic sub-assembly comprising a second substrate web, a second electrically conductive layer disposed on the second substrate web, and an electrochromic anodic gel layer disposed on the second electrically conductive layer.

2. The cathodic electro-optic sub-assembly of claim 1, further comprising:
a release liner disposed over the electrochromic cathodic gel layer.

3. The cathodic electro-optic sub-assembly of claim 1 or claim 2, wherein the electrochromic cathodic gel layer forms a pattern on the first electrically conductive layer.

4. The cathodic electro-optic sub-assembly of any one of claims 1-3, wherein the first substrate web is a polymeric web comprising a material selected from polyethylene polymer, polyethylene terephthalate (PET), a polyethylene naphthalate (PEN), polycarbonate, polysulfone polymer, acrylic polymer, poly(methyl methacrylate) (PMMA), polymethacrylate polymer, polyimide polymer, polyamide polymer, cycloaliphatic diamine dodecanedioic acid polymer, epoxy polymer, cyclic olefin polymer, cyclic olefin copolymers (COC), polymethylpentene polymer, cellulose ester based polymer, cellulose triacetate, transparent fluoropolymer, polyacrylonitrile polymer, and combinations thereof.

5. The cathodic electro-optic sub-assembly of any one of claims 1-3, wherein the first substrate web is a glass web comprising a material selected from borosilicate glass and soda lime glass.

6. The cathodic electro-optic sub-assembly of any one of claims 1-5, further comprising:
at least one barrier layer disposed between the first substrate web and the first electrically conductive layer,
wherein the at least one barrier layer is resistant to at least one of oxygen and water.

7. The cathodic electro-optic sub-assembly of any one of claims 1-6, wherein the first electrically conductive layer comprises at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, an indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

8. The cathodic electro-optic sub-assembly of any one of claims 1-7, wherein the electrochromic cathodic component is covalently bonded to the polymeric matrix.

9. An anodic electro-optic sub-assembly, comprising:
a first substrate web;
a first electrically conductive layer disposed on the first substrate web; and
an electrochromic anodic gel layer disposed on the first electrically conductive layer, wherein the electrochromic anodic gel layer is formed as a free-standing gel that includes at least one solvent and a cross-linked polymeric matrix in which an electrochromic anodic component is dispersed, the electrochromic anodic gel layer comprising a thickness in a range of 20 µm to 500 µm,
wherein a thickness variation of the electrochromic anodic gel layer comprises less than about 20% of an average thickness of the electrochromic anodic gel layer,
wherein the amount of polymeric matrix in the electrochromic anodic gel layer is 20 wt.% to 50 wt.%, and
wherein the anodic electro-optic sub-assembly is configured to be assembled with a cathodic electro-optic sub-assembly to form an electrochromic assembly, the cathodic electro-optic sub-assembly comprising a second substrate web, a second electrically conductive layer disposed on the second substrate web, and an electrochromic cathodic gel layer disposed on the second electrically conductive layer.

10. The anodic electro-optic sub-assembly of claim 9, further comprising:
a release liner disposed over the electrochromic anodic gel layer.

11. The anodic electro-optic sub-assembly of claim 9 or claim 10, wherein the electrochromic anodic gel layer forms a pattern on the first electrically conductive layer.

12. The anodic electro-optic sub-assembly of any one of claims 9-11, wherein the first substrate web is a polymeric web or a glass web.

13. The anodic electro-optic sub-assembly of any one of claims 9-12, further comprising:
at least one barrier layer disposed between the first substrate web and the first electrically conductive layer,
wherein the at least one barrier layer is resistant to at least one of oxygen and water.

14. The anodic electro-optic sub-assembly of any one of claims 9-13, wherein the first electrically conductive layer comprises at least one material selected from a transparent conductive oxide (TCO), fluorine-doped tin oxide (F:SnO₂), aluminum-doped zinc oxide (AZO), indium-doped zinc oxide (IZO), indium tin oxide (ITO), doped zinc oxide, an indium zinc oxide, metal oxide/metal/metal oxide, metal oxide/metal alloy/metal oxide, insulator-metal-insulator (IMI) stack, silver nano-wire coating, carbon nanotubes, graphene coating, conductive nanorods, wire grid, conductive polymer, and poly(3,4-ethylenedioxythiophene) (PEDOT).

15. The anodic electro-optic sub-assembly of any one of claims 9-14, wherein the electrochromic anodic component is covalently bonded to the polymeric matrix.

## Patentansprüche

1. Kathodische elektrooptische Unterbaugruppe, umfassend:
eine erste Substratbahn;
eine erste elektrisch leitfähige Schicht, die auf der ersten Substratbahn angeordnet ist; und
eine elektrochrome kathodische Gelschicht, die auf der ersten elektrisch leitenden Schicht angeordnet ist, wobei die elektrochrome kathodische Gelschicht als freistehendes Gel ausgebildet ist, das mindestens ein Lösungsmittel und eine vernetzte polymere Matrix enthält, in der eine elektrochrome kathodische Komponente dispergiert ist, wobei die elektrochrome kathodische Gelschicht eine Dicke im Bereich von 20 µm bis 500 µm umfasst,
wobei eine Dickenvariation der elektrochromen kathodischen Gelschicht weniger als etwa 20 % einer durchschnittlichen Dicke der elektrochromen kathodischen Gelschicht umfasst,
wobei die Menge an polymerer Matrix in der elektrochromen kathodischen Gelschicht 20 Gew.-% bis 50 Gew.-% beträgt und
wobei die kathodische elektrooptische Unterbaugruppe so konfiguriert ist, dass sie mit einer anodischen elektrooptischen Unterbaugruppe zusammengebaut werden kann, um eine elektrochrome Baugruppe zu bilden, wobei die anodische elektrooptische Unterbaugruppe eine zweite Substratbahn, eine zweite elektrisch leitende Schicht, die auf der zweiten Substratbahn angeordnet ist, und eine elektrochrome anodische Gelschicht, die auf der zweiten elektrisch leitenden Schicht angeordnet ist, umfasst.

2. Kathodische elektrooptische Unterbaugruppe nach Anspruch 1, weiter umfassend:
eine Trennschicht, die über der elektrochromen kathodischen Gelschicht angeordnet ist.

3. Kathodische elektrooptische Unterbaugruppe nach Anspruch 1 oder 2, wobei die elektrochrome kathodische Gelschicht ein Muster auf der ersten elektrisch leitenden Schicht bildet.

4. Kathodische elektrooptische Unterbaugruppe nach einem der Ansprüche 1 bis 3,
wobei die erste Substratbahn eine Polymerbahn ist, die ein Material, ausgewählt aus Polyethylenpolymer, Polyethylenterephthalat (PET), einem Polyethylennaphthalat (PEN), Polycarbonat, Polysulfonpolymer, Acrylpolymer, Poly(methylmethacrylat) (PMMA), Polymethacrylatpolymer, Polyimidpolymer, Polyamidpolymer, cycloaliphatischem Diamin-Dodecandisäure-Polymer, Epoxidpolymer, cyclischem Olefinpolymer, cyclischen Olefincopolymeren (COC), Polymethylpentenpolymer, Polymer auf Basis von Celluloseester, Cellulosetriacetat, transparentem Fluorpolymer, Polyacrylonitrilpolymer und Kombinationen davon, umfasst.

5. Kathodische elektrooptische Unterbaugruppe nach einem der Ansprüche 1 bis 3, wobei die erste Substratbahn eine Glasbahn ist, die ein Material, ausgewählt aus Borosilikatglas und Kalknatronglas, umfasst.

6. Kathodische elektrooptische Unterbaugruppe nach einem der Ansprüche 1 bis 5, weiter umfassend:
mindestens eine Barrierenschicht, die zwischen der ersten Substratbahn und der ersten elektrisch leitenden Schicht angeordnet ist,
wobei die mindestens eine Barrierenschicht gegenüber mindestens einem von Sauerstoff und Wasser beständig ist.

7. Kathodische elektrooptische Unterbaugruppe nach einem der Ansprüche 1 bis 6, wobei die erste elektrisch leitfähige Schicht mindestens ein Material, ausgewählt aus einem transparenten leitfähigen Oxid (TCO), fluordotiertem Zinnoxid (F:SnO₂), aluminiumdotiertem Zinkoxid (AZO), indiumdotiertem Zinkoxid (IZO), Indiumzinnoxid (ITO), dotiertem Zinkoxid, einem Indiumzinkoxid, Metalloxid /Metall/Metalloxid, Metalloxid/Metalllegierung/Metalloxid, Isolator-Metall-Isolator (IMI)-Stapel, Silber-Nanodraht-Beschichtung, Kohlenstoff-Nanoröhren, Graphen-Beschichtung, leitfähigen Nanostäbchen, Drahtgitter, leitfähigem Polymer und Poly(3,4-ethylendioxythiophen) (PEDOT), umfasst.

8. Kathodische elektrooptische Unterbaugruppe nach einem der Ansprüche 1 bis 7, wobei die elektrochrome kathodische Komponente kovalent an die polymere Matrix gebunden ist.

9. Anodische elektrooptische Unterbaugruppe, umfassend:
eine erste Substratbahn;
eine erste elektrisch leitfähige Schicht, die auf der ersten Substratbahn angeordnet ist; und
eine elektrochrome anodische Gelschicht, die auf der ersten elektrisch leitenden Schicht angeordnet ist, wobei die elektrochrome anodische Gelschicht als freistehendes Gel ausgebildet ist, das mindestens ein Lösungsmittel und eine vernetzte polymere Matrix enthält, in der eine elektrochrome anodische Komponente dispergiert ist, wobei die elektrochrome anodische Gelschicht eine Dicke im Bereich von 20 µm bis 500 µm aufweist,
wobei eine Dickenvariation der elektrochromen anodischen Gelschicht weniger als etwa 20 % einer durchschnittlichen Dicke der elektrochromen anodischen Gelschicht umfasst, wobei die Menge an polymerer Matrix in der elektrochromen anodischen Gelschicht 20 Gew.-% bis 50 Gew.-% beträgt und
wobei die anodische elektrooptische Unterbaugruppe so konfiguriert ist, dass sie mit einer kathodischen elektrooptischen Unterbaugruppe zusammengebaut werden kann,
um eine elektrochrome Baugruppe zu bilden, wobei die kathodische elektrooptische Unterbaugruppe eine zweite Substratbahn, eine zweite elektrisch leitende Schicht, die auf der zweiten Substratbahn angeordnet ist, und eine elektrochrome kathodische Gelschicht, die auf der zweiten elektrisch leitenden Schicht angeordnet ist, umfasst.

10. Anodische elektrooptische Unterbaugruppe nach Anspruch 9, weiter umfassend:
eine Trennschicht, die über der elektrochromen anodischen Gelschicht angeordnet ist.

11. Anodische elektrooptische Unterbaugruppe nach Anspruch 9 oder Anspruch 10, wobei die elektrochrome anodische Gelschicht ein Muster auf der ersten elektrisch leitenden Schicht bildet.

12. Anodische elektrooptische Unterbaugruppe nach einem der Ansprüche 9 bis 11, wobei die erste Substratbahn eine Polymerbahn oder eine Glasbahn ist.

13. Anodische elektrooptische Unterbaugruppe nach einem der Ansprüche 9 bis 12, weiter umfassend:
mindestens eine Barrierenschicht, die zwischen der ersten Substratbahn und der ersten elektrisch leitenden Schicht angeordnet ist,
wobei die mindestens eine Barrierenschicht gegenüber mindestens einem von Sauerstoff und Wasser beständig ist.

14. Anodische elektrooptische Unterbaugruppe nach einem der Ansprüche 9-13, wobei die erste elektrisch leitende Schicht mindestens ein Material, ausgewählt aus einem transparenten leitfähigen Oxid (TCO), fluordotiertem Zinnoxid (F:SnO₂), aluminiumdotiertem Zinkoxid (AZO), indiumdotiertem Zinkoxid (IZO), Indiumzinnoxid (ITO), dotiertem Zinkoxid, einem Indium-Zinkoxid, Metalloxid/Metall/Metalloxid, Metalloxid/Metalllegierung/Metalloxid, Isolator-Metall-Isolator (IMI)-Stapel, Silber-Nanodraht-Beschichtung, Kohlenstoff-Nanoröhren, Graphen-Beschichtung, leitfähigen Nanostäbchen, Drahtgitter, leitfähigem Polymer und Poly(3,4-ethylendioxythiophen) (PEDOT), umfasst.

15. Anodische elektrooptische Unterbaugruppe nach einem der Ansprüche 9-14, wobei die elektrochrome anodische Komponente kovalent an die polymere Matrix gebunden ist.

## Revendications

1. Sous-ensemble électro-optique cathodique, comprenant :
une première bande de substrat ;
une première couche électriquement conductrice disposée sur la première bande de substrat ; et
une couche de gel cathodique électrochromique disposée sur la première couche électriquement conductrice, dans lequel la couche de gel cathodique électrochromique est formée en tant que gel libre qui inclut au moins un solvant et une matrice polymère réticulée dans laquelle un composant cathodique électrochromique est dispersé, la couche de gel cathodique électrochromique comprenant une épaisseur dans une plage de 20 µm à 500 µm,
dans lequel une variation d'épaisseur de la couche de gel cathodique électrochromique comprend moins d'environ 20 % d'une épaisseur moyenne de la couche de gel cathodique électrochromique,
dans lequel la quantité de matrice polymère dans la couche de gel cathodique électrochromique est de 20 % en poids à 50 % en poids, et
dans lequel le sous-ensemble électro-optique cathodique est configuré pour être assemblé avec un sous-ensemble électro-optique anodique pour former un ensemble électrochromique, le sous-ensemble électro-optique anodique comprenant une seconde bande de substrat, une seconde couche électriquement conductrice disposée sur la seconde bande de substrat et une couche de gel anodique électrochromique disposée sur la seconde couche électriquement conductrice.

2. Sous-ensemble électro-optique cathodique selon la revendication 1, comprenant en outre :
une doublure de libération disposée sur la couche de gel cathodique électrochromique.

3. Sous-ensemble électro-optique cathodique selon la revendication 1 ou revendication 2, dans lequel la couche de gel cathodique électrochromique forme un motif sur la première couche électriquement conductrice.

4. Sous-ensemble électro-optique cathodique selon l'une quelconque des revendications 1 à 3, dans lequel la première bande de substrat est une bande polymère comprenant un matériau sélectionné parmi un polymère de polyéthylène, du polyéthylène téréphtalate (PET), un polyéthylène naphtalate (PEN), du polycarbonate, un polymère de polysulfone, un polymère acrylique, du poly(méthacrylate de méthyle) (PMMA), un polymère de polyméthacrylate, un polymère de polyimide, un polymère de polyamide, un polymère d'acide dodécanedioïque de diamine cycloaliphatique, un polymère époxy, un polymère d'oléfine cyclique, des copolymères d'oléfine cyclique (COC), un polymère de polyméthylpentène, un polymère à base d'ester de cellulose, du triacétate de cellulose, un fluoropolymère transparent, un polymère de polyacrylonitrile et des combinaisons de ceux-ci.

5. Sous-ensemble électro-optique cathodique selon l'une quelconque des revendications 1 à 3, dans lequel la première bande de substrat est une bande de verre comprenant un matériau sélectionné parmi du verre borosilicaté et du verre sodocalcique.

6. Sous-ensemble électro-optique cathodique selon l'une quelconque des revendications 1 à 5, comprenant en outre :
au moins une couche barrière disposée entre la première bande de substrat et la première couche électriquement conductrice,
dans lequel l'au moins une couche barrière est résistante à au moins un de l'oxygène et de l'eau.

7. Sous-ensemble électro-optique cathodique selon l'une quelconque des revendications 1 à 6, dans lequel la première couche électriquement conductrice comprend au moins un matériau sélectionné parmi un oxyde conducteur transparent (TCO), de l'oxyde d'étain dopé au fluor (F/SnO₂), de l'oxyde de zinc dopé à l'aluminium (AZO), de l'oxyde de zinc dopé à l'indium (IZO), de l'oxyde d'étain et d'indium (ITO), de l'oxyde de zinc dopé, un oxyde de zinc et d'indium, un oxyde métallique/métal/oxyde métallique, un oxyde métallique/alliage métallique/oxyde métallique, une pile isolant-métal-isolant (IMI), un revêtement de nanofil d'argent, des nanotubes de carbone, un revêtement de graphène, des nanotiges conductrices, une armature, un polymère conducteur et du poly(3,4-éthylènedioxythiophène) (PEDOT).

8. Sous-ensemble électro-optique cathodique selon l'une quelconque des revendications 1 à 7, dans lequel le composant cathodique électrochromique est lié par covalence à la matrice polymère.

9. Sous-ensemble électro-optique anodique, comprenant :
une première bande de substrat ;
une première couche électriquement conductrice disposée sur la première bande de substrat ; et
une couche de gel anodique électrochromique disposée sur la première couche électriquement conductrice, dans lequel la couche de gel anodique électrochromique est formée en tant que gel libre qui inclut au moins un solvant et une matrice polymère réticulée dans laquelle un composant anodique électrochromique est dispersé, la couche de gel anodique électrochromique comprenant une épaisseur dans une plage de 20 µm à 500 µm,
dans lequel une variation d'épaisseur de la couche de gel anodique électrochromique comprend moins d'environ 20 % d'une épaisseur moyenne de la couche de gel anodique électrochromique,
dans lequel la quantité de matrice polymère dans la couche de gel anodique électrochromique est de 20 % en poids à 50 % en poids, et
dans lequel le sous-ensemble électro-optique anodique est configuré pour être assemblé avec un sous-ensemble électro-optique cathodique pour former un ensemble électrochromique, le sous-ensemble électro-optique cathodique comprenant une seconde bande de substrat, une seconde couche électriquement conductrice disposée sur la seconde bande de substrat et une couche de gel cathodique électrochromique disposée sur la seconde couche électriquement conductrice.

10. Sous-ensemble électro-optique anodique selon la revendication 9, comprenant en outre :
une doublure de libération disposée sur la couche de gel anodique électrochromique.

11. Sous-ensemble électro-optique anodique selon la revendication 9 ou revendication 10, dans lequel la couche de gel anodique électrochromique forme un motif sur la première couche électriquement conductrice.

12. Sous-ensemble électro-optique anodique selon l'une quelconque des revendications 9 à 11, dans lequel la première bande de substrat est une bande polymère ou une bande de verre.

13. Sous-ensemble électro-optique anodique selon l'une quelconque des revendications 9 à 12, comprenant en outre :
au moins une couche barrière disposée entre la première bande de substrat et la première couche électriquement conductrice,
dans lequel l'au moins une couche barrière est résistante à au moins un de l'oxygène et de l'eau.

14. Sous-ensemble électro-optique anodique selon l'une quelconque des revendications 9 à 13, dans lequel la première couche électriquement conductrice comprend au moins un matériau sélectionné parmi un oxyde conducteur transparent (TCO), de l'oxyde d'étain dopé au fluor (F/SnO₂), de l'oxyde de zinc dopé à l'aluminium (AZO), de l'oxyde de zinc dopé à l'indium (IZO), de l'oxyde d'étain et d'indium (ITO), de l'oxyde de zinc dopé, un oxyde de zinc et d'indium, un oxyde métallique/métal/oxyde métallique, un oxyde métallique/alliage métallique/oxyde métallique, une pile isolant-métal-isolant (IMI), un revêtement de nanofil d'argent, des nanotubes de carbone, un revêtement de graphène, des nanotiges conductrices, une armature, un polymère conducteur et du poly(3,4-éthylènedioxythiophène) (PEDOT).

15. Sous-ensemble électro-optique anodique selon l'une quelconque des revendications 9 à 14, dans lequel le composant anodique électrochromique est lié par covalence à la matrice polymère.
